# EUROPEAN PATENT APPLICATION

(11) **EP 4 300 301 A1**
(43) Date of publication of application: **03.01.2024**
(21) Application number: 21928253.0
(22) Date of filing: 28.12.2021
(51) Int. Cl.: G06F 9/455, G06F 9/451, G06F 15/78, B60R 16/023

(54) **SIGNAL PROCESSING DEVICE AND VEHICLE DISPLAY DEVICE HAVING SAME**

(30) Priority: 26.02.2021 KR 20210026453; 23.04.2021 KR 20210053004
(71) Applicant: LG Electronics Inc., Yeongdeungpo-gu Seoul 07336 (KR)
(72) Inventor: HAN, Dongwoo, Seoul 06772 (KR); JEONG, Sangkyeong, Seoul 06772 (KR); YU, Ganghee, Seoul 06772 (KR); LEE, Dongkyu, Seoul 06772 (KR); YOON, Jaegu, Seoul 06772 (KR); JUNG, Dukyung, Seoul 06772 (KR)
(74) Representative: Vossius & Partner Patentanwälte Rechtsanwälte mbB
(86) International application number: PCT/KR2021/020076
(87) International publication number: WO 2022/181961

(57) **Abstract**

A signal processing device and a display apparatus for vehicle including the same are disclosed. The signal processing device includes a processor configured to perform signal processing for a display located in a vehicle, wherein the processor is configured to execute first to third virtual machines on a hypervisor in the processor, the first virtual machine in the processor is configured to generate a virtual overlay, change the layer sequence or display area of the virtual overlay, and transmit the changed virtual overlay or information regarding the changed virtual overlay to the second or the third virtual machine for displaying the changed virtual overlay on the first display or the second display. Consequently, the display sequence and display area of a plurality of overlays may be changed.

## Description

### Technical field of the invention

The present disclosure relates to a signal processing device and a display apparatus for vehicle including the same, and more particularly to a signal processing device capable of changing the display sequence and display area of a plurality of overlays and a display apparatus for vehicle including the same.

### Background technology

A vehicle is an apparatus that a driver moves in a desired direction. A representative example of the vehicle is a car.

Meanwhile, a display apparatus for vehicle is mounted in the vehicle for convenience of users who use the vehicle.

For example, a display is disposed in a cluster to display various kinds of information. Meanwhile, to display vehicle driving information, various displays, such as an audio video navigation (AVN) display, are mounted in the vehicle, in addition to the cluster.

In the case in which the number of displays in the display apparatus for vehicle is increased, however, signal processing for the displays is complicated.

In particular, when a plurality of overlays is displayed on a plurality of displays, signal processing is complicated.

### Detailed description of the invention

### Technical objectives

An object of the present disclosure is to provide a signal processing device capable of changing the display sequence and display area of a plurality of overlays and a display apparatus for vehicle including the same.

Another object of the present disclosure is to provide a signal processing device capable of changing the display sequence and display area of a plurality of overlays even though the number of virtual machines is increased and a display apparatus for vehicle including the same.

A further object of the present disclosure is to provide a signal processing device capable of changing the display sequence and display area of a plurality of overlays even though operating systems of a plurality of virtual machines are different from each other and a display apparatus for vehicle including the same.

### Technical solutions

In accordance with an aspect of the present disclosure, the above and other objects can be accomplished by the provision of a signal processing device including a processor configured to perform signal processing for a display located in a vehicle, wherein the processor is configured to execute first to third virtual machines on a hypervisor in the processor, the second virtual machine is operated for a first display, the third virtual machine is operated for a second display, and the first virtual machine in the processor is configured to generate a virtual overlay, change the layer sequence or display area of the virtual overlay, and transmit the changed virtual overlay or information regarding the changed virtual overlay to the second virtual machine or the third virtual machine for displaying the changed virtual overlay on the first display or the second display.

Meanwhile, the second virtual machine or the third virtual machine may combine the changed virtual overlay with each physical overlay, and may be configured to display a composite overlay on the first display or the second display.

Meanwhile, the second virtual machine or the third virtual machine may map the virtual overlay and the physical overlay one to one, and may be configured to display a composite overlay generated by one-to-one mapping on the first display or the second display.

Meanwhile, the second virtual machine or the third virtual machine may map the virtual overlay and the physical overlay one to n, and may be configured to display a composite overlay generated by one-to-n mapping on the first display or the second display.

Meanwhile, the first virtual machine may be configured to delete the virtual overlay or add another virtual overlay.

Meanwhile, each of the second virtual machine and the third virtual machine may generate a virtual overlay, and the first virtual machine may set the overlay sequence or display area of the virtual overlays generated by the second virtual machine and the third virtual machine.

Meanwhile, the first virtual machine may change the overlay sequence or display area of the virtual overlays generated by the second virtual machine and the third virtual machine.

Meanwhile, the processor may further execute a fourth virtual machine operated for a third display, each of the second virtual machine to the fourth virtual machine may generate a virtual overlay, and the first virtual machine may set the overlay sequence or display area of the virtual overlays generated by the second virtual machine to the fourth virtual machine.

Meanwhile, the first virtual machine may change the construction of a layer displayed on the first display or the second display during run time.

Meanwhile, the first virtual machine may generate the virtual overlay displayed on both the first display and the second display.

Meanwhile, the first virtual machine may move and display the generated virtual overlay on the first display or the second display.

Meanwhile, the first virtual machine may generate a first virtual overlay including vehicle speed information, the second virtual machine may generate a second virtual overlay including content information or contact information, the third virtual machine may generate a third virtual overlay including map information, and the first virtual machine may be configured to display at least one of the first to third virtual overlays on the first display or the second display.

Meanwhile, the first virtual machine may be configured to display the vehicle speed information and the contact information on the first display and display the map information and speed limit information on the second display.

Meanwhile, the processor may further execute a fourth virtual machine operated for a third display, the first virtual machine may generate a first virtual overlay including vehicle speed information, the second virtual machine may generate a second virtual overlay including content information or contact information, the third virtual machine may generate a third virtual overlay including map information, and the first virtual machine may be configured to display at least one of the first to third virtual overlays on the first display to the third display.

Meanwhile, the first virtual machine may be configured to display the vehicle speed information on the map information in the first display, display the contact information on the map information in the second display, and display the map information on the third display.

Meanwhile, in response to message information being received, the first virtual machine may be configured to display the message information on the contact information in the second display.

Meanwhile, in response to message information being received, the first virtual machine may be configured to display the message information on the map information in the third display.

Meanwhile, the first virtual machine may move an object on a plurality of virtual overlays, and may be configured to display the moved object on at least one of a plurality of displays.

Meanwhile, the first virtual machine may include a display manager including an overlay controller configured to control an overlay, a layer controller configured to control a layer, and a composition controller configured to control the construction or sequence of the layer, and each of the second virtual machine and the third virtual machine may include a window manager configured to display a window of a layer.

Meanwhile, the first virtual machine may receive and process wheel speed sensor data of the vehicle, and may transmit an overlay indicating the processed wheel speed sensor data or speed information corresponding to the processed wheel speed sensor data to at least one of the second virtual machine and the third virtual machine.

In accordance with another aspect of the present disclosure, there is provided a signal processing device including a processor configured to perform signal processing for a display located in a vehicle, wherein the processor is configured to execute first to third virtual machines on a hypervisor in the processor, the second virtual machine is operated for a first display, the third virtual machine is operated for a second display, the first virtual machine in the processor is configured to generate a virtual overlay and transmit the virtual overlay to the second virtual machine or the third virtual machine, and the second virtual machine or the third virtual machine is configured to change the layer sequence or display area of the virtual overlay in response to the virtual overlay being displayed on the first display or the second display.

In accordance with a further aspect of the present disclosure, there is provided a display apparatus for vehicle, the display apparatus including a first display, a second display, and a signal processing device including a processor configured to perform signal processing for the first display and the second display, wherein the processor is configured to execute first to third virtual machines on a hypervisor in the processor, the second virtual machine is operated for a first display, the third virtual machine is operated for a second display, and the first virtual machine in the processor is configured to generate a virtual overlay, change the layer sequence or display area of the virtual overlay, and transmit the changed virtual overlay or information regarding the changed virtual overlay to the second virtual machine or the third virtual machine for displaying the changed virtual overlay on the first display or the second display.

### Effects of the invention

A signal processing device according to an embodiment of the present disclosure includes a processor configured to perform signal processing for a display located in a vehicle, wherein the processor is configured to execute first to third virtual machines on a hypervisor in the processor, the second virtual machine is operated for a first display, the third virtual machine is operated for a second display, and the first virtual machine in the processor is configured to generate a virtual overlay, change the layer sequence or display area of the virtual overlay, and transmit the changed virtual overlay or information regarding the changed virtual overlay to the second virtual machine or the third virtual machine for displaying the changed virtual overlay on the first display or the second display. Consequently, the display sequence and display area of a plurality of overlays may be changed. In addition, the display sequence and display area of the plurality of overlays may be changed even though the number of virtual machines that are driven is increased.

Meanwhile, the second virtual machine or the third virtual machine may combine the changed virtual overlay with each physical overlay, and may be configured to display a composite overlay on the first display or the second display. Consequently, the composite overlay may be displayed on the display.

Meanwhile, the second virtual machine or the third virtual machine may map the virtual overlay and the physical overlay one to one, and may be configured to display a composite overlay generated by one-to-one mapping on the first display or the second display. Consequently, the composite overlay may be displayed on the display.

Meanwhile, the second virtual machine or the third virtual machine may map the virtual overlay and the physical overlay one to n, and may be configured to display a composite overlay generated by one-to-n mapping on the first display or the second display. Consequently, the composite overlay may be displayed on the display.

Meanwhile, the first virtual machine may be configured to delete the virtual overlay or add another virtual overlay. Consequently, the construction of the virtual overlay may be changed.

Meanwhile, each of the second virtual machine and the third virtual machine may generate a virtual overlay, and the first virtual machine may set the overlay sequence or display area of the virtual overlays generated by the second virtual machine and the third virtual machine. Consequently, the sequence or display area of the virtual overlays may be controlled.

Meanwhile, the first virtual machine may change the overlay sequence or display area of the virtual overlays generated by the second virtual machine and the third virtual machine. Consequently, the sequence or display area of the virtual overlays may be changed.

Meanwhile, the processor may further execute a fourth virtual machine operated for a third display, each of the second virtual machine to the fourth virtual machine may generate a virtual overlay, and the first virtual machine may set the overlay sequence or display area of the virtual overlays generated by the second virtual machine to the fourth virtual machine. Consequently, the sequence and display area of the virtual overlays may be controlled. In addition, the display sequence and display area of the plurality of overlays may be changed even though the number of virtual machines that are driven is increased.

Meanwhile, the first virtual machine may change the construction of a layer displayed on the first display or the second display during run time. Consequently, the construction of the layer displayed during run time may be changed.

Meanwhile, the first virtual machine may generate the virtual overlay displayed on both the first display and the second display. Consequently, the generated virtual overlay may be easily displayed.

Meanwhile, the first virtual machine may move and display the generated virtual overlay on the first display or the second display. Consequently, the generated virtual overlay may be easily moved.

Meanwhile, the first virtual machine may generate a first virtual overlay including vehicle speed information, the second virtual machine may generate a second virtual overlay including content information or contact information, the third virtual machine may generate a third virtual overlay including map information, and the first virtual machine may be configured to display at least one of the first to third virtual overlays on the first display or the second display. Consequently, various kinds of information may be displayed through the display.

Meanwhile, the first virtual machine may be configured to display the vehicle speed information and the contact information on the first display and display the map information and speed limit information on the second display. Consequently, various kinds of information may be displayed through the display.

Meanwhile, the processor may further execute a fourth virtual machine operated for a third display, the first virtual machine may generate a first virtual overlay including vehicle speed information, the second virtual machine may generate a second virtual overlay including content information or contact information, the third virtual machine may generate a third virtual overlay including map information, and the first virtual machine may be configured to display at least one of the first to third virtual overlays on the first display to the third display. Consequently, various kinds of information may be displayed through the display. In addition, the display sequence and display area of the plurality of overlays may be changed even though the number of virtual machines that are driven is increased.

Meanwhile, the first virtual machine may be configured to display the vehicle speed information on the map information in the first display, display the contact information on the map information in the second display, and display the map information on the third display. Consequently, various kinds of information may be displayed through the display.

Meanwhile, in response to message information being received, the first virtual machine may be configured to display the message information on the contact information in the second display. Consequently, various kinds of information may be displayed through the display.

Meanwhile, in response to message information being received, the first virtual machine may be configured to display the message information on the map information in the third display. Consequently, various kinds of information may be displayed through the display.

Meanwhile, the first virtual machine may move an object on a plurality of virtual overlays, and may be configured to display the moved object on at least one of a plurality of displays. Consequently, the object may be moved and displayed.

Meanwhile, the first virtual machine may include a display manager including an overlay controller configured to control an overlay, a layer controller configured to control a layer, and a composition controller configured to control the construction or sequence of the layer, and each of the second virtual machine and the third virtual machine may include a window manager configured to display a window of a layer. Consequently, various kinds of information may be displayed through the display.

Meanwhile, the first virtual machine may receive and process wheel speed sensor data of the vehicle, and may transmit an overlay indicating the processed wheel speed sensor data or speed information corresponding to the processed wheel speed sensor data to at least one of the second virtual machine and the third virtual machine. Consequently, at least one virtual machine may share the wheel speed sensor data of the vehicle. In addition, the vehicle speed information may be displayed through the display.

A signal processing device according to another embodiment of the present disclosure includes a processor configured to perform signal processing for a display located in a vehicle, wherein the processor is configured to execute first to third virtual machines on a hypervisor in the processor, the second virtual machine is operated for a first display, the third virtual machine is operated for a second display, the first virtual machine in the processor is configured to generate a virtual overlay and transmit the virtual overlay to the second virtual machine or the third virtual machine, and the second virtual machine or the third virtual machine is configured to change the layer sequence or display area of the virtual overlay in response to the virtual overlay being displayed on the first display or the second display. Consequently, the display sequence and display area of a plurality of overlays may be changed. In addition, the display sequence and display area of the plurality of overlays may be changed even though the number of virtual machines that are driven is increased.

A display apparatus for vehicle according to an embodiment of the present disclosure includes a first display, a second display, and a signal processing device including a processor configured to perform signal processing for the first display and the second display, wherein the processor is configured to execute first to third virtual machines on a hypervisor in the processor, the second virtual machine is operated for a first display, the third virtual machine is operated for a second display, and the first virtual machine in the processor is configured to generate a virtual overlay, change the layer sequence or display area of the virtual overlay, and transmit the changed virtual overlay or information regarding the changed virtual overlay to the second virtual machine or the third virtual machine for displaying the changed virtual overlay on the first display or the second display. Consequently, the display sequence and display area of a plurality of overlays may be changed. In addition, the display sequence and display area of the plurality of overlays may be changed even though the number of virtual machines that are driven is increased.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicle according to an embodiment of the present disclosure;
FIG. 3 illustrates an example of an internal block diagram of the display apparatus for vehicle of FIG. 2;
FIG. 4 is a view showing a system driven in a signal processing device related to the present disclosure;
FIG. 5 is a view showing an example of a system driven in a signal processing device according to an embodiment of the present disclosure;
FIG. 6 is a view showing another example of the system driven in the signal processing device according to the embodiment of the present disclosure;
FIG. 7 is a view showing a further example of the system driven in the signal processing device according to the embodiment of the present disclosure;
FIGS. 8 to 9B are views referred to in the description of FIG. 5;
FIG. 10 is a view describing that a signal processing device related to the present disclosure displays an overlay;
FIG. 11 is a view describing an example of display of overlays in the system driven in the signal processing device according to the embodiment of the present disclosure;
FIG. 12 is a view referred to in the description of FIG. 11;
FIG. 13 is a view showing the external appearance of a display apparatus for vehicle according to another embodiment of the present disclosure;
FIGS. 14 to 19 are views referred to in the description of FIG. 13;
FIG. 20 is a view showing the external appearance of a display apparatus for vehicle according to a further embodiment of the present disclosure; and
FIGS. 21 and 22 are views referred to in the description of FIG. 20.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

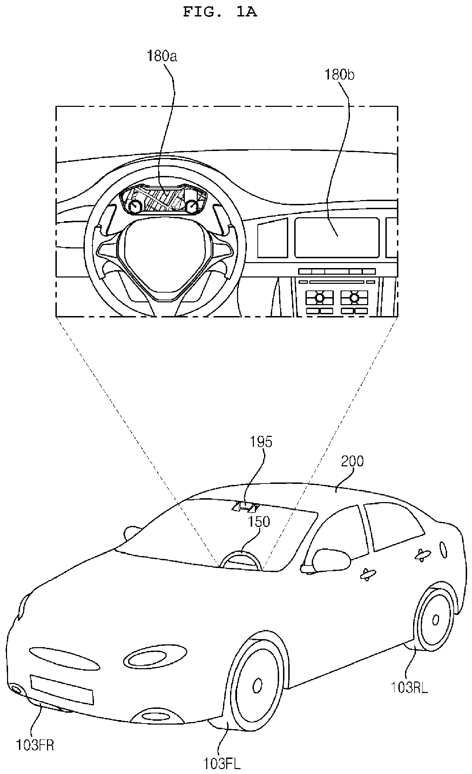

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

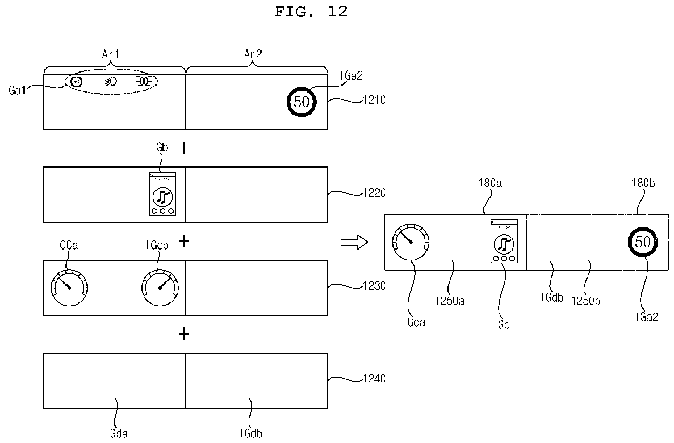

The embodiment of the present disclosure proposes a scheme for a display apparatus 100 for vehicle including a plurality of displays 180a and 180b to divide data processing. This will be described with reference to FIG. 12 and subsequent figures.

Meanwhile, the vehicle 200 described in this specification may be a concept including all of a vehicle having an engine as a power source, a hybrid vehicle having an engine and an electric motor as a power source, and an electric vehicle having an electric motor as a power source.

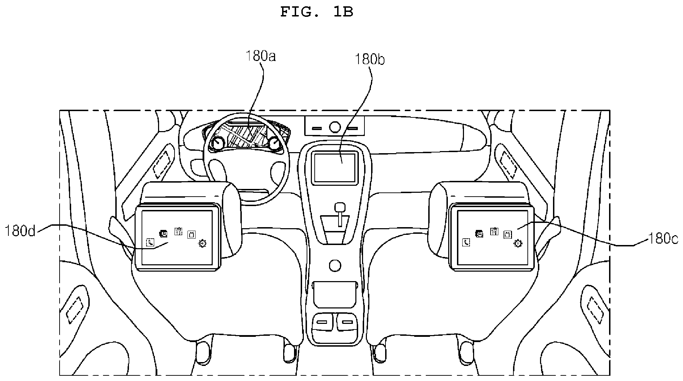

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be mounted in the vehicle.

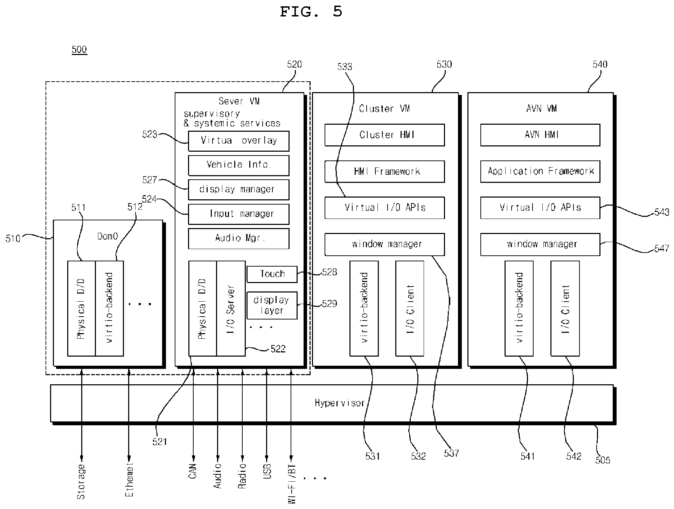

The embodiment of the present disclosure proposes a scheme for a display apparatus 100 for vehicle including a plurality of displays 180a to 180d to change the display sequence and display area of a plurality of overlays. This will be described with reference to FIG. 5 and subsequent figures.

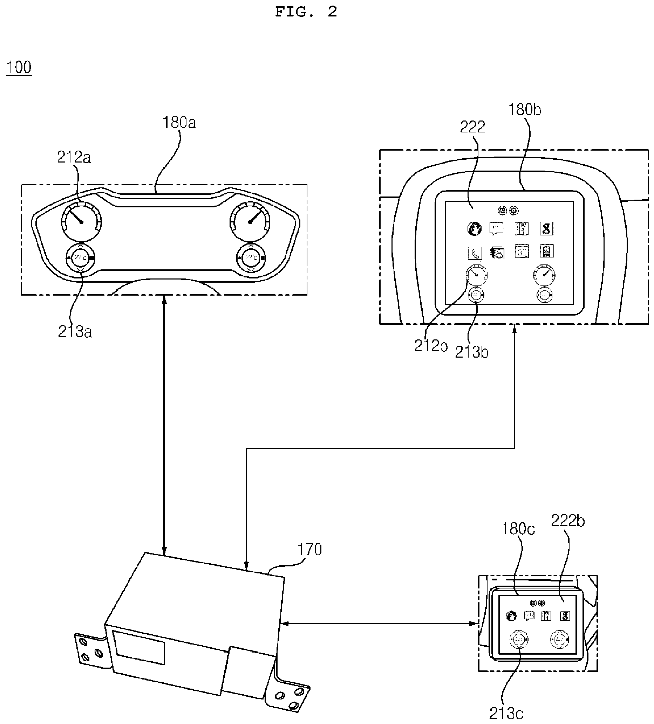

FIG. 2 is a view showing the external appearance of a display apparatus for vehicle according to an embodiment of the present disclosure.

The display apparatus 100 for vehicle according to the embodiment of the present disclosure may include a plurality of displays 180a and 180b and a signal processing device 170 configured to perform signal processing to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may have a processor 175 provided therein, and first to third virtual machines 520 to 540 may be executed by a hypervisor 505 in the processor 175.

The second virtual machine 530 may be operated for the first display 180a, and the third virtual machine 540 may be operated for the second display 180b.

Meanwhile, the first virtual machine 520 in the processor 175 may be configured to set a shared memory 508 based on the hypervisor 505 for transmission of the same data to the second virtual machine 530 and the third virtual machine 540. Consequently, the first display 180a and the second display 180b in the vehicle may be configured to display the same information or the same images in a synchronized state.

Meanwhile, the first virtual machine 520 in the processor 175 shares at least some of data with the second virtual machine 530 and the third virtual machine 540 for divided processing of data. Consequently, the plurality of virtual machines for the plurality of displays in the vehicle may divide and process data.

Meanwhile, the first virtual machine 520 in the processor 175 may receive and process wheel speed sensor data of the vehicle, and may transmit the processed wheel speed sensor data to at least one of the second virtual machine 530 or the third virtual machine 540. Consequently, at least one virtual machine may share the wheel speed sensor data of the vehicle.

Meanwhile, the display apparatus 100 for vehicle according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines 520 to 540, on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS) .

In response to touch being input to any one of the displays 180a and 180b or 180a to 180c configured to be operated under various operating systems, the signal processing device 170 according to the embodiment of the present disclosure may be configured to rapidly and accurately process the touch input.

Meanwhile, FIG. 2 illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a second home screen 222b including a plurality of applications and an in-vehicle temperature indicator 213c is displayed on the third display 180c.

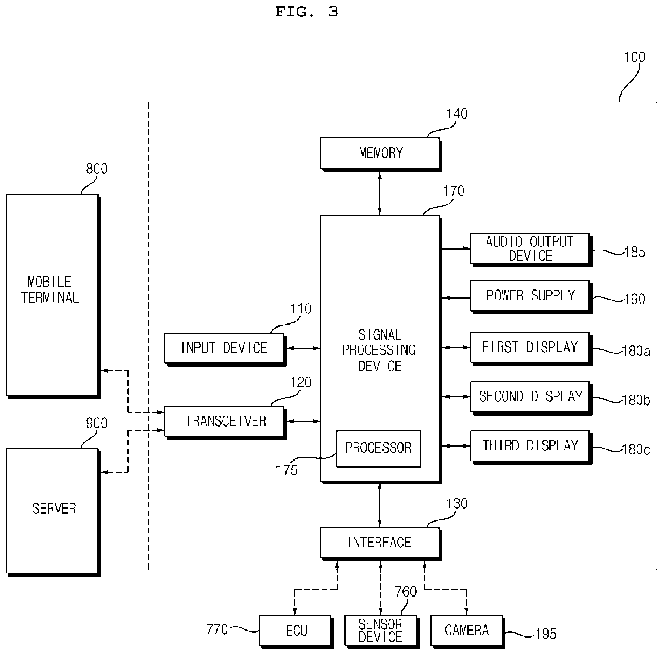

FIG. 3 illustrates an example of an internal block diagram of the display apparatus for vehicle according to the embodiment of the present disclosure.

Referring to the figure, the display apparatus 100 for vehicle according to the embodiment of the present disclosure may include an input device 110, a transceiver 120, an interface 130, a memory 140, a signal processing device 170, a plurality of displays 180a to 180c, an audio output device 185, and a power supply 190.

The input device 110 may include a physical button or pad for button input or touch input.

Meanwhile, the input device 110 may include a touch sensor (not shown) configured to sense touch input to the displays 180a, 180b, and 180c.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The interface 130 may receive sensor information from an electronic control unit (ECU) 770 or a sensor device 760, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The memory 140 may store various data necessary for overall operation of the display apparatus 100 for vehicle, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the display apparatus 100 for vehicle.

For example, the signal processing device 170 may include a processor 175 configured to perform signal processing for the displays 180a and 180b.

The processor 175 may execute the first to third virtual machines 520 to 540 on the hypervisor 505 (see FIG. 5) in the processor 175.

Meanwhile, the processor 175 may further execute a legacy virtual machine configured to receive and process Ethernet data. For example, as shown in FIG. 5, the legacy virtual machine may be executed by the first virtual machine 520 in the processor 175.

Among the first to third virtual machines 520 to 540 (see FIG. 5), the first virtual machine 520 may be called a server virtual machine, and the second and third virtual machines 530 and 540 may be called guest virtual machines.

The second virtual machine 530 may be operated for the first display 180a, and the third virtual machine 540 may be operated for the second display 180b.

For example, the first virtual machine 520 in the processor 175 may receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

As another example, the first virtual machine 520 may directly receive and process CAN communication data, audio data, radio data, USB data, and wireless communication data for the second and third virtual machines 530 and 540.

The first virtual machine 520 may transmit the processed data to the second and third virtual machines 530 and 540.

Consequently, only the first virtual machine 520, among the first to third virtual machines 520 to 540, may receive communication data and external input data, and may perform signal processing, whereby load in signal processing by the other virtual machines may be reduced and 1:N data communication may be achieved, and therefore synchronization at the time of data sharing may be achieved.

Meanwhile, the first virtual machine 520 writes some of data in a first shared memory (not shown) to be transmitted to the second virtual machine 530, and writes some other of data in the first shared memory (not shown) to be transmitted to the third virtual machine 540. The second virtual machine 530 and the third virtual machine 540 are configured to process the received data, and write the processed data in a second shared memory (not shown). Consequently, the display sequence and display area of a plurality of overlays may be changed.

At this time, data may be any one of image data, audio data, navigation data, and voice recognition data.

Meanwhile, the first virtual machine 520 may process some other of data, and may be configured to write the processed data in the second shared memory (not shown). That is, the first virtual machine 520 may perform data processing in addition to the second virtual machine 530 and the third virtual machine 540.

Meanwhile, in response to a fourth virtual machine 550 configured to be operated for the third display 180c being executed in the processor 175, the first virtual machine 520 may write some other of data in the first shared memory (not shown), and the fourth virtual machine 550 may process the received data and may be configured to write the processed data in the second shared memory (not shown).

Meanwhile, the first virtual machine 520 may generate command queues for distributed processing of data in the second virtual machine 530 and the third virtual machine 540. Consequently, the plurality of virtual machines may divide and process data.

Meanwhile, in response to the second virtual machine 530 and the third virtual machine 540 sharing the same data, the first virtual machine 520 in the processor 175 may generate one command queue. Consequently, the same data may be synchronized and shared.

Meanwhile, the first virtual machine 520 may generate command queues corresponding to the number of virtual machines for distributed processing of data.

Meanwhile, the first virtual machine 520 may be configured to transmit at least some of data to at least one of the second virtual machine 530 or the third virtual machine 540 for distributed processing of data.

For example, the first virtual machine 520 may allocate the first shared memory (not shown) for transmitting at least some of data to at least one of the second virtual machine 530 or the third virtual machine 540, and image data processed by the second virtual machine 530 or the third virtual machine 540 may be written in the second shared memory (not shown).

Meanwhile, the first virtual machine 520 may be configured to write data in the shared memory 508, whereby the second virtual machine 530 and the third virtual machine 540 share the same data.

For example, the first virtual machine 520 may be configured to write radio data or wireless communication data in the shared memory 508, whereby the second virtual machine 530 and the third virtual machine 540 share the same data. Consequently, 1:N data sharing may be achieved.

Eventually, the first virtual machine 520 may process most of the data, whereby 1:N data sharing may be achieved.

Meanwhile, the first virtual machine 520 in the processor 175 may be configured to set the shared memory 508 based on the hypervisor 505 to transmit the same data to the second virtual machine 530 and the third virtual machine 540.

That is, the first virtual machine 520 in the processor 175 may transmit the same data to the second virtual machine 530 and the third virtual machine 540 in a synchronized state using the shared memory 508 based on the hypervisor 505. Consequently, the plurality of displays 180a and 180b in the vehicle may be configured to display the same images in a synchronized state.

Meanwhile, the signal processing device 170 may process various signals, such as an audio signal, an image signal, and a data signal. To this end, the signal processing device 170 may be implemented in the form of a system on chip (SOC).

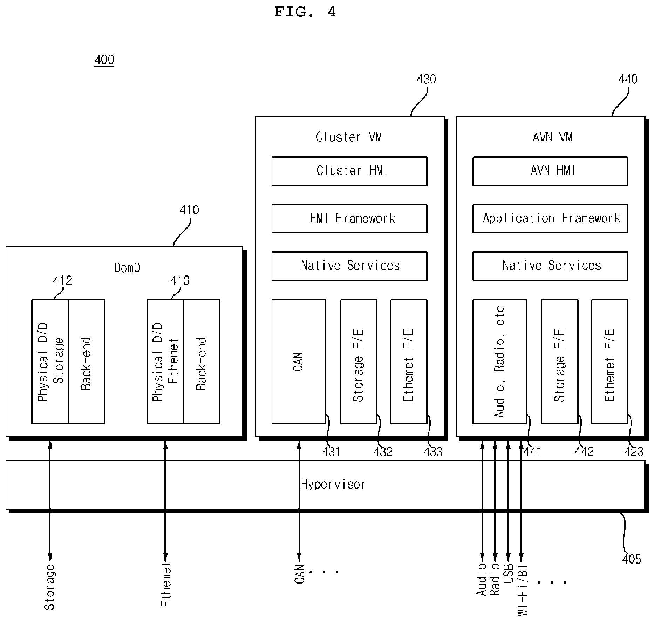

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the processor 175.

Meanwhile, the system 400 driven in the signal processing device of FIG. 4 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are classified into a server virtual machine and guest virtual machines such that various memory data and communication data are input and output not in the guest virtual machines but in the server virtual machine. This will be described with reference to FIG. 5 and subsequent figures.

FIG. 5 is a view showing an example of a system driven in a signal processing device according to an embodiment of the present disclosure.

Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 may be a virtual machine for the cluster display 180a, and the third virtual machine 540 may be a virtual machine for the AVN display 180b.

That is, the second virtual machine 530 and the third virtual machine 540 may be operated for image rendering of the cluster display 180a and the AVN display 180b, respectively.

Meanwhile, the system 50 driven in the signal processing device 170 of FIG. 5 illustrates that a legacy virtual machine 510 is also executed on the hypervisor 505 in the processor 175.

The legacy virtual machine 510 may include an interface 511 for data communication with the memory 140 and Ethernet communication.

The figure illustrates that the interface 511 is a physical device driver; however, various modifications are possible.

Meanwhile, the legacy virtual machine 510 may further include a virtio-backend interface 512 for data communication with the second and third virtual machines 530 and 540.

The first virtual machine 520 may include an interface 521 for input and output of audio data, radio data, USB data, and wireless communication data and an input and output server interface 522 for data communication with the guest virtual machines.

That is, the first virtual machine 520, which is a server virtual machine, may provide inputs/outputs (I/O) difficult to virtualize with standard virtualization technology (VirtIO) to a plurality of guest virtual machines, such as the second and third virtual machines 530 and 540.

Meanwhile, the first virtual machine 520, which is a server virtual machine, may control radio data and audio data at a supervisor level, and may provide the data to a plurality of guest virtual machines, such as the second and third virtual machines 530 and 540.

Meanwhile, the first virtual machine 520, which is a server virtual machine, may process vehicle data, sensor data, and surroundings-of-vehicle information, and may provide the processed data or information to a plurality of guest virtual machines, such as the second and third virtual machines 530 and 540.

Meanwhile, the first virtual machine 520 may provide supervisory services, such as processing of vehicle data and audio routing management.

Next, the second virtual machine 530 may include an input and output client interface 532 for data communication with the first virtual machine 520 and APIs 533 configured to control the input and output client interface 532.

In addition, the second virtual machine 530 may include a virtio-backend interface for data communication with the legacy virtual machine 510.

The second virtual machine 530 may receive memory data by communication with the memory 140 or Ethernet data by Ethernet communication from the virtio-backend interface 512 of the legacy virtual machine 510 through the virtio-backend interface.

Next, the third virtual machine 540 may include an input and output client interface 542 for data communication with the first virtual machine 520 and APIs 543 configured to control the input and output client interface 542.

In addition, the third virtual machine 540 may include a virtio-backend interface for data communication with the legacy virtual machine 510.

The third virtual machine 540 may receive memory data by communication with the memory 140 or Ethernet data by Ethernet communication from the virtio-backend interface 512 of the legacy virtual machine 510 through the virtio-backend interface.

Meanwhile, the legacy virtual machine 510 may be provided in the first virtual machine 520, unlike FIG. 5.

In the system 500, CAN communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, touch input to the first display 180a or the second display 180b is input only to the first virtual machine 520 and is not input to the second virtual machine 530 and the third virtual machine 540. Information regarding the touch input is transmitted to the second virtual machine 530 or the third virtual machine 540.

Consequently, the touch input may be rapidly and accurately processed. In addition, the touch input may be rapidly and accurately processed even though the number of virtual machines that are driven is increased.

Meanwhile, in the system 500 of FIG. 5, the second and third virtual machines 530 and 540 may be operated based on different operating systems.

For example, the second virtual machine 530 may be operated based on a Linux OS, and the third virtual machine 540 may be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images may be shared in a synchronized state. Eventually, the plurality of displays 180a and 180b may be configured to display the same data or the same images in a synchronized state.

Meanwhile, the first virtual machine 520 transmits information regarding the touch input to the second virtual machine 530 or the third virtual machine 540 even though the second and third virtual machines 530 and 540 are operated based on different operating systems. Consequently, the touch input may be rapidly and accurately processed even though the second and third virtual machines 530 and 540 are operated based on different operating systems (OS).

Meanwhile, the first virtual machine 520 may include a display manager 527 configured to control overlays displayed on the first display 180a and the second display 180b, a display layer server 529, and a virtual overlay creator 523 configured to generate a virtual overlay.

The display layer server 529 may receive a first overlay provided by the second virtual machine 530 and a second overlay provided by the third virtual machine 540.

Meanwhile, the display layer server 529 may transmit a virtual overlay generated by the virtual overlay creator 523 to at least one of the second virtual machine 530 or the third virtual machine 540.

Meanwhile, the display manager 527 in the first virtual machine 520 may receive the first overlay provided by the second virtual machine 530 and the second overlay provided by the third virtual machine 540 through the display layer server 529.

The display manager 527 in the first virtual machine 520 may be configured to transmit the virtual overlay, which is different from the first overlay or the second overlay, to at least one of the second virtual machine 530 or the third virtual machine 540 through the display layer server 529.

In response thereto, the second virtual machine 530 may be configured to combine and display he first overlay and the virtual overlay on the first display 180a.

In addition, the third virtual machine 540 may be configured to combine and display the second overlay and the virtual overlay on the second display 180b.

Meanwhile, the first virtual machine 520 may include an input manager 524 configured to receive an input signal from the outside. At this time, the input signal may be an input signal from a predetermined button (start button) in the vehicle, a touch input signal, or a voice input signal.

For example, the input manager 524 in the first virtual machine 520 may receive touch input from the first display 180a or the second display 180b.

Meanwhile, the first virtual machine 520 may include a touch server 528 configured to transmit information regarding the touch input related to the touch input from the first display 180a or the second display 180b to the second virtual machine 530 or the third virtual machine 540.

For example, when there is touch input corresponding to the first display 180a, the touch server 528 in the first virtual machine 520 may transmit information regarding the touch input to the second virtual machine 530.

Meanwhile, the touch server 528 in the first virtual machine 520 may receive the touch input from the first display 180a or the second display 180b.

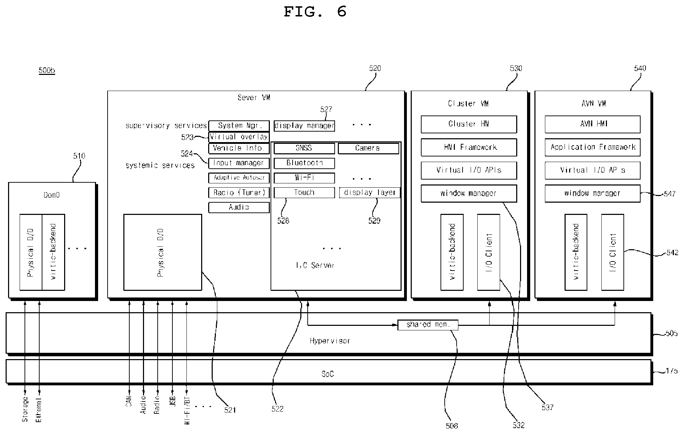

FIG. 6 is a view showing another example of the system driven in the signal processing device according to the embodiment of the present disclosure.

Referring to the figure, in the system 500b driven by the processor 175 in the signal processing device 170, the processor 175 in the signal processing device 170 executes the first to third virtual machines 520 to 540 on the hypervisor 505 in the processor 175, and the first virtual machine 520 in the processor 175 is configured to set the shared memory 508 based on the hypervisor 505 for transmission of data to the second and third virtual machines 530 and 540.

For example, information regarding touch input may be illustrated as the data. Consequently, the information regarding touch input may be transmitted to the second virtual machine 530 or the third virtual machine 540. Eventually, the touch input to the first display 180a or the second display 180b may be rapidly and accurately processed. In addition, the touch input may be rapidly and accurately processed even though the number of virtual machines that are driven is increased.

As another example, image data may be illustrated as the data. Consequently, an image may be displayed on the first display 180a or the second display 180b.

Meanwhile, in respnse to the same image data being shared in the shared memory 508, the plurality of displays 180a and 180b in the vehicle may be configured to display the same data in a synchronized state.

As another example, CAN communication data, audio data, radio data, USB data, wireless communication data, or position information data may be illustrated as the data. Consequently, information regarding the data may be displayed on the first display 180a or the second display 180b.

Meanwhile, although not shown in FIG. 6, the legacy virtual machine 510 may transmit memory data from the memory 140 or Ethernet data by Ethernet communication to the second and third virtual machines 530 and 540 using the shared memory 508 based on the hypervisor 505. Consequently, information corresponding to the memory data or the Ethernet data may be displayed on the first display 180a or the second display 180b.

Meanwhile, the first virtual machine 520 in the system 500b of FIG. 6 may include a display manager 527, a display layer server 529, a virtual overlay creator 523, an input manager 524, and a touch server 528, similarly to the first virtual machine 520 in the system 500 of FIG. 5.

Meanwhile, the input and output server interface 522 in the first virtual machine 520 in the system 500b of FIG. 6 may include a display layer server 529 and a touch server 528, unlike FIG. 5.

The operation of the display manager 527, the display layer server 529, the input manager 524, the virtual overlay creator 523, and the touch server 528 is the same to FIG. 5, and therefore a description thereof will be omitted.

Meanwhile, the first virtual machine 520 of FIG. 6 may further include a system manager for overall system control, a vehicle information manager for vehicle information management, an audio manager for audio control, and a radio manager for radio control.

Meanwhile, the input and output server interface 522 in the first virtual machine 520 in the system 500b of FIG. 6 may further include a GNSS server for GPS information input and output, a Bluetooth server for Bluetooth input and output, a Wi-Fi server for Wi-Fi input and output, and a camera server for camera data input and output.

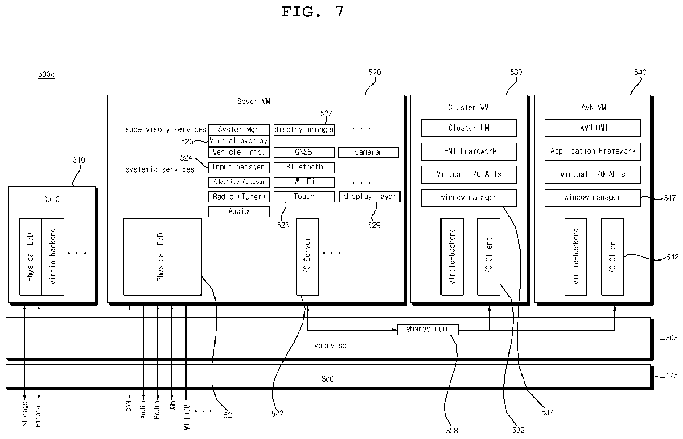

FIG. 7 is a view showing a further example of the system driven in the signal processing device according to the embodiment of the present disclosure.

Referring to the figure, the system 500c driven by the processor 175 in the signal processing device of FIG. 7 is similar to the system 500b of FIG. 6.

That is, like FIG. 6, the processor 175 of FIG. 7 executes the first to third virtual machines 520 to 540 on the hypervisor 505 in the processor 175.

In FIG. 7, however, the display layer server 529 and the touch server 528 may be provided and executed in the first virtual machine 520 outside the input and output server interface 522, unlike FIG. 6.

In addition, the GNSS server for GPS information input and output, the Bluetooth server for Bluetooth input and output, the Wi-Fi server for Wi-Fi input and output, and the camera server for camera data input and output may be provided and executed in the first virtual machine 520 outside the input and output server interface 522, unlike FIG. 6.

That is, the display manager 527, the display layer server 529, the virtual overlay creator 523, the input manager 524, and the touch server 528 may be provided and executed in the first virtual machine 520.

The operation of the display manager 527, the display layer server 529, the virtual overlay creator 523, the input manager 524, and the touch server 528 is the same to FIG. 5, and therefore a description thereof will be omitted.

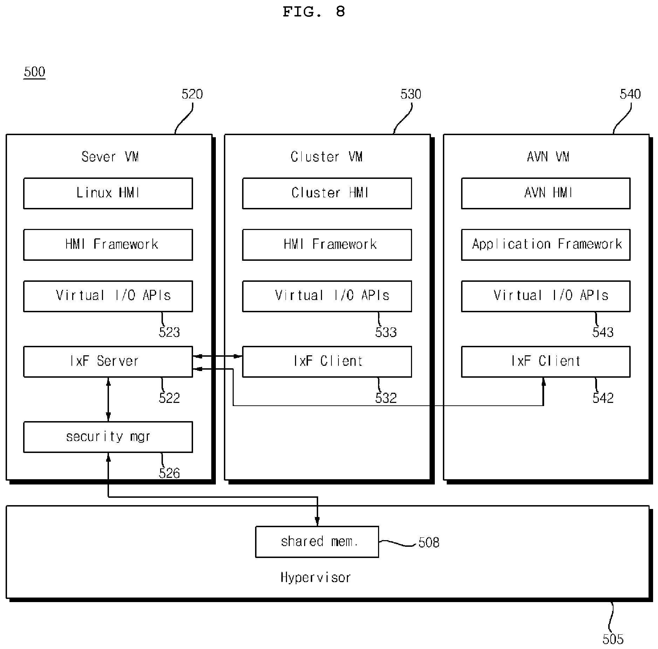

FIGS. 8 to 9B are views referred to in the description of FIG. 5.

First, FIG. 8 illustrates that the first to third virtual machines 520 to 540 are executed on the hypervisor 505 in the processor 175 of the system 500 according to the present disclosure and that the first virtual machine 520 in the processor 175 is configured to set the shared memory 508 based on the hypervisor 505 to transmit the same data to the second virtual machine 530 and the third virtual machine 540.

Consequently, the first display 180a and the second display 180b in the vehicle may be configured to display the same images in a synchronized state.

Meanwhile, high-speed data communication may be performed between the plurality of virtual machines. Furthermore, high-speed data communication may be performed even though the plurality of virtual machines is driven by different operating systems.

Meanwhile, the first virtual machine 520 in the processor 175 may not allocate memories corresponding in number to the virtual machines but may use a single shared memory 508, not memory allocation in respnse to transmitting the data processed by the first virtual machine 520 to another virtual machine. Consequently, 1:N data communication using the shared memory 508, not 1:1 data communication, may be performed between the virtual machines.

Meanwhile, the first virtual machine 520 in the processor 175 may include an input and output server interface 522 and a security manager 526.

Meanwhile, the second virtual machine 530 and the third virtual machine 540 may include input and output client interfaces 532 and 542, respectively. Consequently, high-speed data communication between the plurality of virtual machines may be performed using the input and output server interface 522 and the input and output client interfaces 532 and 542.

The input and output server interface 522 in the first virtual machine 520 may receive requests for transmission of the same data from the input and output client interfaces 532 and 542 in the second virtual machine 530 and the third virtual machine 540, and may transmit shared data to the shared memory 508 through the security manager 526 based thereon.

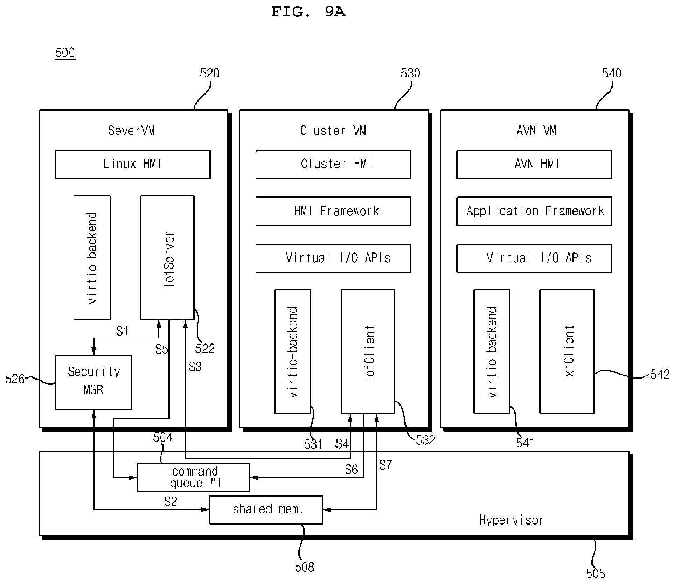

FIG. 9A is a view illustrating transmission of shared data in more detail.

Referring to the figure, to transmit shared data, the input and output server interface 522 in the first virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may transmit a request for connection to the input and output server interface 522 after allocation of the shared memory 508 (S3).

Meanwhile, the input and output server interface 522 transmits information regarding the shared memory 508 including key data to the input and output client interfaces 532 and 542 after allocation of the shared memory 508 (S4). At this time, the key data may be private key data.

Meanwhile, the first virtual machine 520 in the processor 175 may transmit information regarding the shared memory 508 to the second virtual machine 530 and the third virtual machine 540 after setting of the shared memory 508.

Subsequently, the input and output server interface 522 in the first virtual machine 520 is configured to generate a command or a command queue for event processing, other than data, to control distributed processing between the virtual machines (S5).

The figure illustrates that a command queue is generated in a command queue buffer 504 in the hypervisor 505 under control of the input and output server interface 522. However, the present disclosure is not limited thereto, and the command queue may be generated in the first virtual machine 520, not the hypervisor 505, under control of the input and output server interface 522.

Subsequently, the input and output client interfaces 532 and 542 access the command queue buffer 504 to receive the generated command queue or information regarding the command queue (S6).

For example, in response to the commands transmitted to the input and output client interfaces 532 and 542 being the same, the generated command queues may be the same.

As another example, in response to the commands transmitted to the input and output client interfaces 532 and 542 being different from each other, different command queues may be transmitted to the input and output client interfaces 532 and 542.

Subsequently, the input and output client interfaces 532 and 542 may access the shared memory 508 based on the received key data (S5), and may copy or read the shared data from the shared memory 508 (S7).

Particularly, when the input and output client interfaces 532 and 542 receive the same shared vfv input and output client interfaces 532 and 542 may access the shared memory 508 based on the same command queues and the same key data (S5), and may copy or read the shared data from the shared memory 508.

Consequently, the second virtual machine 530 and the third virtual machine 540 may access the shared memory 508, and may eventually share the shared data.

For example, in the case in which the shared data are image data, the second virtual machine 530 and the third virtual machine 540 may share the image data, and eventually the plurality of displays 180a and 180b in the vehicle may be configured to display the same shared images in a synchronized state.

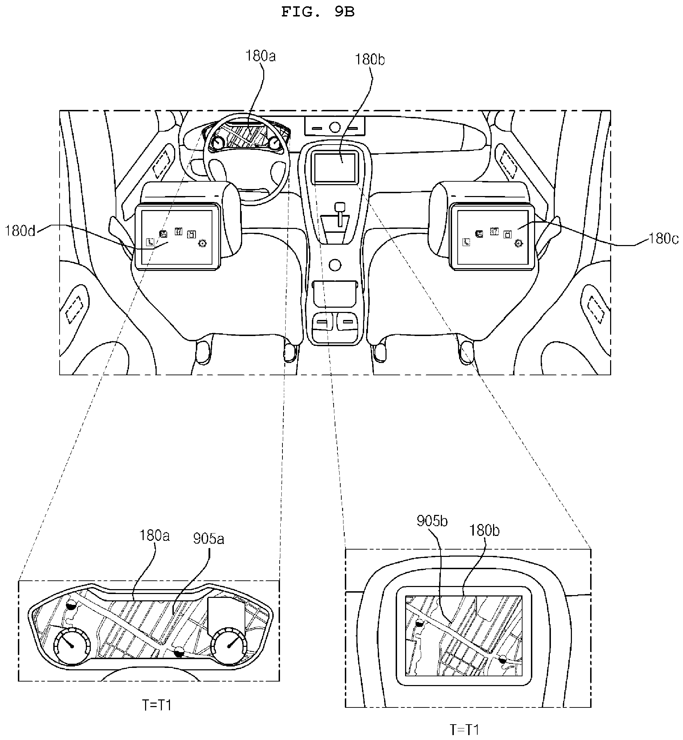

FIG. 9B illustrates that, by the system 500 of FIG. 9A, the second virtual machine 530 displays image data received through the shared memory 508 on the first display 180a, and the third virtual machine 540 displays image data received through the shared memory 508 on the second display 180b.

FIG. 9B illustrates that an image 905a displayed on the first display 180a and an image 905b displayed on the second display 180b are synchronized, whereby the same images 905a and 905b are displayed at the time of T1.

That is, image data processed by the first virtual machine 520 in the processor 175 are transmitted to the second virtual machine 530 and the third virtual machine 540 through the shared memory 508, and the first image 905a displayed on the first display 180a and the second image 905b displayed on the second display 180b based on the image data may be the same. Consequently, the plurality of displays 180a and 180b in the vehicle may be configured to display the same images in a synchronized state.

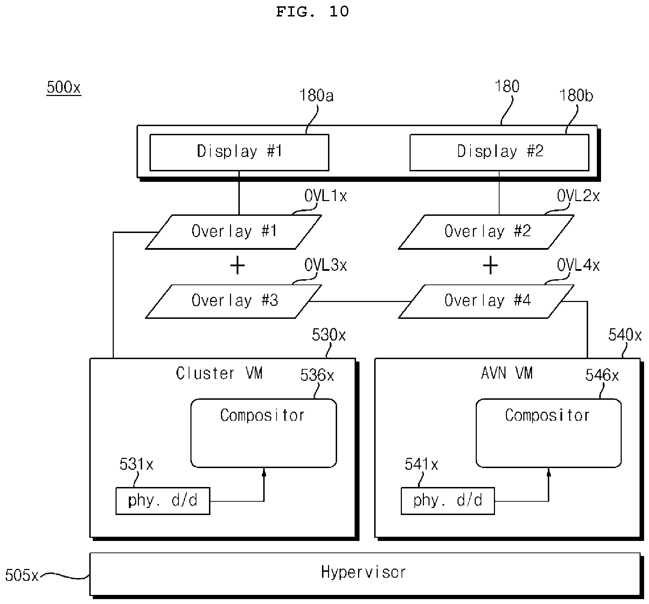

FIG. 10 is a view describing that a signal processing device related to the present disclosure displays an overlay.

Referring to the figure, a system 500x driven in the signal processing device 170 related to the present disclosure may be configured to display a first overlay OVL1x and a third overlay OVL3x on the first display 180a, and may be configured to display a second overlay OVL2x and a fourth overlay OVL4x on the second display 180b.

Specifically, the first overlay OVL1x and the third overlay OVL3x may be displayed on the first display 180a in the state in which the first overlay is displayed on the third overlay, and the second overlay OVL2x and the fourth overlay OVL4x may be displayed on the second display 180b in the state in which the second overlay is displayed on the fourth overlay.

To this end, a cluster virtual machine 530x may dispose the first overlay OVL1x on the third overlay OVL3x, and an AVN virtual machine 540x may dispose the second overlay OVL2x on the fourth overlay OVL4x.

In the system 500x of the figure, however, change of the layer sequence, such as disposition of the third overlay OVL3x on the first overlay OVL1x, is difficult during run time in the state in which the first overlay OVLlx is displayed on the third overlay OVL3x.

Similarly, change of the layer sequence, such as disposition of the fourth overlay OVL4x on the second overlay OVL2x, is difficult during run time in the state in which the second overlay OVL2x is displayed on the fourth overlay OVL4x.

Meanwhile, when the virtual machines that control the displays perform setting of the overlays, as in the system 500x of the figure, all requirements of a user interface may not be satisfied, since the number of overlays that can be displayed is limited.

Furthermore, when a separate display and a virtual machine corresponding thereto are added, the signal processing device 170 also performs signal processing of overlays in the added virtual machine, and therefore processing load of the signal processing device may be increased.

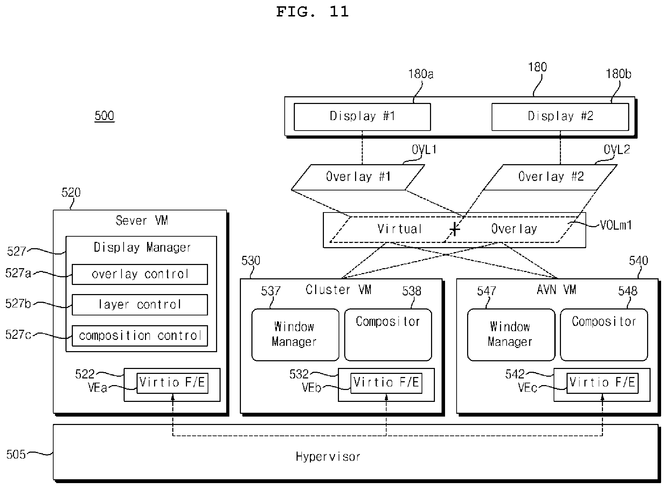

The present disclosure proposes a scheme capable of changing the display sequence and display area of a plurality of overlays. This will be described with reference to FIG. 11 and subsequent figures.

FIG. 11 is a view describing an example of display of overlays in the system driven in the signal processing device according to the embodiment of the present disclosure.

Referring to the figure, the processor 175 in the signal processing device 170 according to the embodiment of the present disclosure drives the hypervisor 505, and executes the first virtual machine 520, the second virtual machine 530, and the third virtual machine 540 on the hypervisor 505.

Meanwhile, the first virtual machine 520 according to the embodiment of the present disclosure changes the layer sequence or display area of a virtual overlay, and transmits the changed virtual overlay or information regarding the changed virtual overlay to the second virtual machine 530 or the third virtual machine 540 such that the changed virtual overlay is displayed on the first display 180a or the second display 180b.

Consequently, the display sequence and display area of the plurality of overlays may be changed. In addition, the display sequence and display area of the plurality of overlays may be changed even though the number of virtual machines that are driven is increased.

Meanwhile, the second virtual machine 530 or the third virtual machine 540 may combine the changed virtual overlay with each physical overlay, and may be configured to display the composite overlay on the first display 180a or the second display 180b. Consequently, the composite overlay may be displayed on the display.

Meanwhile, a first virtual machine 520 according to another embodiment of the present disclosure is configured to generate a virtual overlay and transmit the virtual overlay to a second virtual machine 530 or a third virtual machine 540 according to another embodiment of the present disclosure, and the second virtual machine 530 or the third virtual machine 540 is configured to change the layer sequence or display area of the virtual overlay in response to the virtual overlay being displayed on the first display 180a or the second display 180b.

Consequently, the display sequence and display area of the plurality of overlays may be changed. In addition, the display sequence and display area of the plurality of overlays may be changed even though the number of virtual machines that are driven is increased.

Meanwhile, the first virtual machine 520 may include a display manager 527 including an overlay controller 527a configured to control an overlay, a layer controller 527b configured to control a layer, and a composition controller 527c configured to control the construction or sequence of the layer.

Meanwhile, the input and output server interface 522 in the first virtual machine 520 may include a front interface VEa configured to transmit a command for constructing the virtual overlay to the second virtual machine 530 and the third virtual machine 540 or to receive a command for constructing the virtual overlay from the second virtual machine 530 and the third virtual machine 540.

Meanwhile, the input and output client interface 532 in the second virtual machine 530 may include a front interface VEb configured to receive a command for constructing the virtual overlay from the first virtual machine 520 or to transmit a command for constructing the virtual overlay to the first virtual machine 520.

Meanwhile, the second virtual machine 530 may include a window manager 537 configured to control a window of an image in which an overlay will be generated or displayed and a compositor 538 configured to combine overlays or windows generated by the second virtual machine 530.

Meanwhile, the input and output client interface 542 in the third virtual machine 540 may include a front interface VEc configured to receive a command for constructing the virtual overlay from the first virtual machine 520 or to transmit a command for constructing the virtual overlay to the first virtual machine 520.

Meanwhile, the third virtual machine 540 may include a window manager 547 configured to control a window of an image in which an overlay will be generated or displayed and a compositor 548 configured to combine overlays or windows generated by the third virtual machine 540.

Meanwhile, the first virtual machine 520 to the third virtual machine 540 may transmit or receive virtual overlays using the shared memory 508, as described with reference to FIGS. 8, 9A, and 9B.

For example, the first virtual machine 520 may transmit a first virtual overlay generated by the first virtual machine 520 to the second virtual machine 530 and the third virtual machine 540 using the shared memory 508.

Meanwhile, the first virtual machine 520 may receive virtual overlays generated by the second virtual machine 530 and the third virtual machine 540 using the shared memory 508.

Meanwhile, the first virtual machine 520 may set the sequence of the plurality of virtual overlays, and may transmit information regarding the set sequence to the second virtual machine 530 and the third virtual machine 540 using the shared memory 508.

Meanwhile, the first virtual machine 520 may change the layer sequence or display area of the plurality of virtual overlays, and may transmit sequence change information or area change information to the second virtual machine 530 and the third virtual machine 540 using the shared memory 508.

Consequently, the virtual overlays having changed sequence or changed display area may be displayed on the first display 180a or the second display 180b.

In particular, the sequence or display area may be changed using the first virtual machine 520, which is a server virtual machine, whereby the overlays displayed on the plurality of displays may be efficiently controlled.

In addition, all overlays may be controlled using the first virtual machine 520, which is a server virtual machine, whereby rapid and accurate display may be achieved.

Meanwhile, each of the second virtual machine 530 and the third virtual machine 540 may generate a virtual overlay, and the first virtual machine 520 may set the overlay sequence or display area of the virtual overlays generated by the second virtual machine 530 and the third virtual machine 540. Consequently, the sequence or display area of the virtual overlays may be controlled.

Meanwhile, the first virtual machine 520 may change the overlay sequence or display area of the virtual overlays generated by the second virtual machine 530 and the third virtual machine 540. Consequently, the sequence or display area of the virtual overlays may be changed.

Meanwhile, the first virtual machine 520 may change the construction of the layer displayed on the first display 180a or the second display 180b during run time. Consequently, the construction of the layer displayed during run time may be changed.

Meanwhile, the first virtual machine 520 may generate a virtual overlay displayed on both the first display 180a and the second display 180b. Consequently, the generated virtual overlay may be easily displayed.

Meanwhile, the first virtual machine 520 may move and display the generated virtual overlay on the first display 180a or the second display 180b. Consequently, the generated virtual overlay may be easily moved.

FIG. 11 illustrates that a virtual overlay OVL1 generated by the second virtual machine 530 is displayed on a virtual overlay VOLm1 generated by the first virtual machine 520 and a composite overlay generated by the compositor 538 is displayed on the first display 180a. Consequently, efficient resource management may be achieved.

Meanwhile, FIG. 11 illustrates that a virtual overlay OVL2 generated by the third virtual machine 540 is displayed on the virtual overlay VOLm1 generated by the first virtual machine 520 and a composite overlay generated by the compositor 548 is displayed on the second display 180b. Consequently, efficient resource management may be achieved.

FIG. 12 is a view referred to in the description of FIG. 11.

First, FIG. 12 illustrates a plurality of virtual overlays 1210 to 1240.

Referring to the figure, the first virtual machine 520 may receive vehicle information, and may generate a first virtual overlay 1210 including vehicle turn light information IGsa1 and speed limit information IGa2.

The figure illustrates that the vehicle turn light information IGsa1 is disposed in a first area Ar1 of the first virtual overlay 1210 and the speed limit information IGa2 is disposed in a second area Ar2 of the first virtual overlay 1210.

The second virtual machine 530 may generate a second virtual overlay 1220 including content information or contact information IGb.

The figure illustrates that the contact information IGb is disposed in a first area Ar1 of the second virtual overlay 1220.

Meanwhile, the first virtual machine 520 may receive wheel speed sensor data of the vehicle, and may generate a third virtual overlay 1230 including vehicle speed information IGca based thereon.

The figure illustrates that the vehicle speed information IGca is disposed in a first area Ar1 of the third virtual overlay 1230.

Meanwhile, the third virtual machine 540 may generate a fourth virtual overlay 1240 including map information IGda and IGdb.

The figure illustrates that the first map information IGda is disposed in a first area Ar1 of the fourth virtual overlay 1240 and the second map information IGdb is disposed in a second area Ar2 of the fourth virtual overlay 1240.

Meanwhile, the first virtual machine 520 may be configured to display at least one of the plurality of virtual overlays shown in the figure on the first display 180a or the second display 180b. Consequently, various kinds of information may be displayed through the display.

For example, the first virtual machine 520 may be configured to display the vehicle speed information IGca and the contact information IGb on the first display 180a and the map information IGda and IGdb and display speed limit information IGa2 on the second display 180b, as shown in the figure.

Meanwhile, the first virtual machine 520 may change the layer sequence or display area of the first to fourth virtual overlays 1210 to 1240, and may be configured to display the changed virtual overlays on the first display 180a or the second display 180b.

Consequently, the display sequence and display area of the plurality of overlays may be changed. In addition, the display sequence and display area of the plurality of overlays may be changed even though the number of virtual machines that are driven is increased.

Similarly to this, the first virtual machine 520 may generate a first virtual overlay including vehicle speed information IGca, the second virtual machine 530 may generate a second virtual overlay including content information or contact information IGb, the third virtual machine 540 may generate a third virtual overlay including map information IGda and IGdb, and the first virtual machine 520 may be configured to display at least one of the first to third virtual overlays on the first display 180a or the second display 180b. Consequently, various kinds of information may be displayed through the display.

Meanwhile, the first virtual machine 520 may receive and process wheel speed sensor data of the vehicle, and may transmit an overlay indicating the processed wheel speed sensor data or speed information corresponding to the processed wheel speed sensor data to at least one of the second virtual machine 530 or the third virtual machine 540. Consequently, at least one virtual machine may share the wheel speed sensor data of the vehicle. In addition, the vehicle speed information may be displayed through the display.

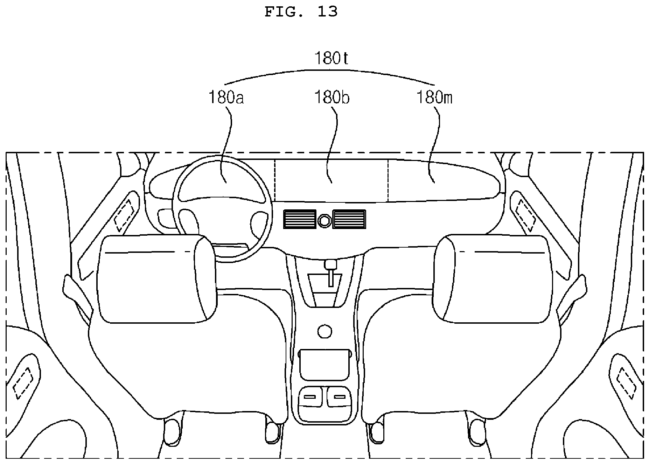

FIG. 13 is a view showing the external appearance of a display apparatus for vehicle according to another embodiment of the present disclosure.

Referring to the figure, the display apparatus 100 for vehicle according to the other embodiment of the present disclosure may include a plurality of displays 180a, 180b, and 180m extending from a driver's seat to a passenger seat and a signal processing device 170 configured to perform signal processing to display images and information on the plurality of displays 180a, 180b, and 180m.

The plurality of displays 180a, 180b, and 180m may be disposed in a single frame.

For example, the plurality of displays 180a, 180b, and 180m may be implemented as a single seamless display 170t.

Among the plurality of displays 180a, 180b, and 180m, the first display 180a may be a cluster display, the second display 180b may be an AVN display, and the third display 180m may be a passenger seat display.

The signal processing device 170 may have a processor 175 provided therein, and may execute first to fourth virtual machines 520 to 550 on a hypervisor 505 in the processor 175.

The second virtual machine 530 may be operated for the first display 180a, the third virtual machine 540 may be operated for the second display 180b, and the fourth virtual machine 550 may be operated for the third display 180m.

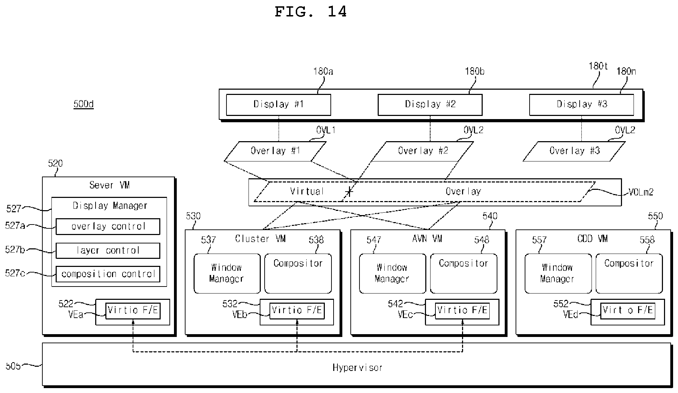

FIGS. 14 to 19 are views referred to in the description of FIG. 13.

First, FIG. 14 is a view illustrating an example of a system 500d driven in the signal processing device for the display apparatus for vehicle of FIG. 13.

Referring to the figure, in the system 500d of FIG. 14, the processor 175 in the signal processing device 170 drives the hypervisor 505, and executes the first virtual machine 520, the second virtual machine 530, the third virtual machine 540, and the fourth virtual machine 550 on the hypervisor 505.

Meanwhile, the first virtual machine 520 according to the embodiment of the present disclosure changes the layer sequence or display area of a virtual overlay, and transmits the changed virtual overlay or information regarding the changed virtual overlay to the second virtual machine 530, the third virtual machine 540, or the fourth virtual machine 550 for displaying the changed virtual overlay on the first display 180a, the second display 180b, or the third display 180m.

Consequently, the display sequence and display area of the plurality of overlays may be changed. In addition, the display sequence and display area of the plurality of overlays may be changed even though the number of virtual machines that are driven is increased.

Meanwhile, the second virtual machine 530, the third virtual machine 540, or the fourth virtual machine 550 may combine the changed virtual overlay with each physical overlay, and may be configured to display the composite overlay on the first display 180a, the second display 180b, or the third display 180m. Consequently, the composite overlay may be displayed on the display.

Meanwhile, a first virtual machine 520 according to another embodiment of the present disclosure is configured to generate a virtual overlay and transmit the virtual overlay to a second virtual machine 530 or a virtual machine 540, or a fourth virtual machine 550 according to another embodiment of the present disclosure, and the second virtual machine 530, the third virtual machine 540, or the fourth virtual machine 550 is configured to change the layer sequence or display area of the virtual overlay in response to the virtual overlay being displayed on the first display 180a, the second display 180b, or the third display 180m.

Consequently, the display sequence and display area of the plurality of overlays may be changed. In addition, the display sequence and display area of the plurality of overlays may be changed even though the number of virtual machines that are driven is increased.

Meanwhile, the first virtual machine 520 may include a display manager 527 including an overlay controller 527a configured to control an overlay, a layer controller 527b configured to control a layer, and a composition controller 527c configured to control the construction or sequence of the layer.

Meanwhile, an input and output server interface 522 in the first virtual machine 520 may include a front interface VEa configured to transmit a command for constructing the virtual overlay to the second virtual machine 530 and the third virtual machine 540 or to receive a command for constructing the virtual overlay from the second virtual machine 530 and the third virtual machine 540.

Meanwhile, an input and output client interface 532 in the second virtual machine 530 may include a front interface VEb configured to receive a command for constructing the virtual overlay from the first virtual machine 520 or to transmit a command for constructing the virtual overlay to the first virtual machine 520.

Meanwhile, the second virtual machine 530 may include a window manager 537 configured to control a window of an image in which an overlay will be generated or displayed and a compositor 538 configured to combine overlays or windows generated by the second virtual machine 530.

Meanwhile, an input and output client interface 542 in the third virtual machine 540 may include a front interface VEc configured to receive a command for constructing the virtual overlay from the first virtual machine 520 or to transmit a command for constructing the virtual overlay to the first virtual machine 520.

Meanwhile, the third virtual machine 540 may include a window manager 547 configured to control a window of an image in which an overlay will be generated or displayed and a compositor 548 configured to combine overlays or windows generated by the third virtual machine 540.

Meanwhile, an input and output client interface 552 in the fourth virtual machine 550 may include a front interface VEd configured to receive a command for constructing the virtual overlay from the first virtual machine 520 or to transmit a command for constructing the virtual overlay to the first virtual machine 520.

Meanwhile, the fourth virtual machine 550 may include a window manager 557 configured to control a window of an image in which an overlay will be generated or displayed and a compositor 558 configured to combine overlays or windows generated by the fourth virtual machine 550.

Meanwhile, the first virtual machine 520 to the fourth virtual machine 550 may transmit or receive virtual overlays using the shared memory 508, as described with reference to FIGS. 8, 9A, and 9B.

Meanwhile, the first virtual machine 520 may change the construction of the layer displayed on the first display 180a, the second display 180b, or the third display 180m during run time. Consequently, the construction of the layer displayed during run time may be changed.

Meanwhile, the first virtual machine 520 may generate a virtual overlay VOLm2 displayed on all of the first display 180a, the second display 180b, and the third display 180m. Consequently, the generated virtual overlay may be easily displayed.

Meanwhile, the first virtual machine 520 may move and display the generated virtual overlay on the first display 180a, the second display 180b, or the third display 180m. Consequently, the generated virtual overlay may be easily moved.

FIG. 14 illustrates that a virtual overlay OVL1 generated by the second virtual machine 530 is displayed on a virtual overlay VOLm2 generated by the first virtual machine 520 and a composite overlay generated by the compositor 538 is displayed on the first display 180a. Consequently, efficient resource management may be achieved.

Meanwhile, FIG. 14 illustrates that a virtual overlay OVL2 generated by the third virtual machine 540 is displayed on the virtual overlay VOLm2 generated by the first virtual machine 520 and a composite overlay generated by the compositor 548 is displayed on the second display 180b. Consequently, efficient resource management may be achieved.

Meanwhile, FIG. 14 illustrates that a virtual overlay OVL3 generated by the fourth virtual machine 550 is displayed on the virtual overlay VOLm2 generated by the first virtual machine 520 and a composite overlay generated by the compositor 558 is displayed on the third display 180m. Consequently, efficient resource management may be achieved.

Meanwhile, the overlay sequence or display area of the virtual overlays generated by the first virtual machine 520 to the fourth virtual machine 550 may be set. Consequently, the sequence and display area of the virtual overlays may be controlled. In addition, the display sequence and display area of the plurality of overlays may be changed even though the number of virtual machines that are driven is increased.

Meanwhile, the second virtual machine 530 or the third virtual machine 540 may map the virtual overlay and the physical overlay one to one, and may be configured to display a composite overlay generated by one-to-one mapping on the first display 180a or the second display 180b. Consequently, the composite overlay may be displayed on the display.

Meanwhile, the second virtual machine 530 or the third virtual machine 540 may map the virtual overlay and the physical overlay one to n, and may be configured to display a composite overlay generated by one-to-n mapping on the first display 180a or the second display 180b. Consequently, the composite overlay may be displayed on the display.

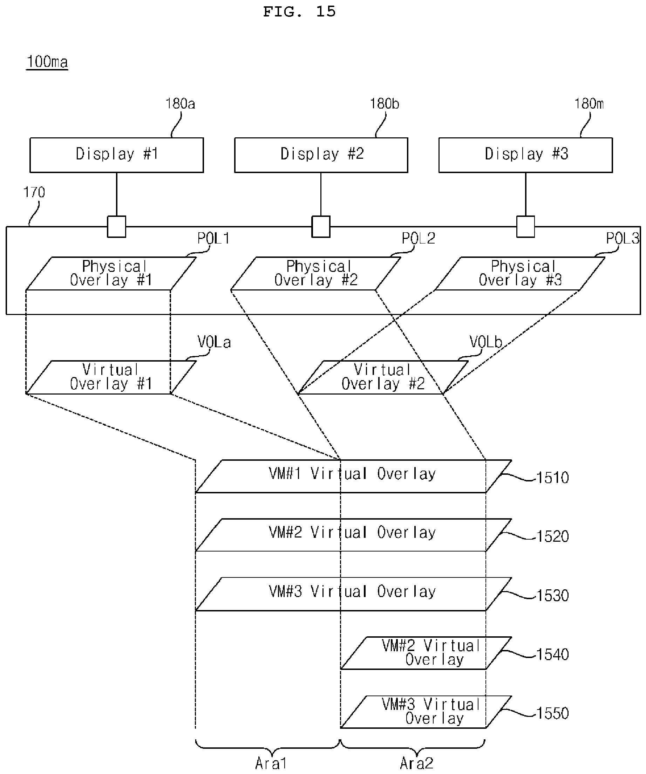

Meanwhile, the first virtual machine 520 may be configured to delete the virtual overlay or add another virtual overlay. Consequently, the construction of the virtual overlay may be changed. This will be described with reference to FIG. 15 and subsequent figures.

FIG. 15 is a view referred to in describing display of an image using a plurality of virtual overlays.

Referring to the figure, each of the first virtual machine 520, the second virtual machine 530, and the third virtual machine 540 may generate a first virtual overlay 1510, a second virtual overlay 1520, and a third virtual overlay 1530, each including a first area Ara1 and a second area Ara2.

Meanwhile, each of the second virtual machine 530 and the third virtual machine 540 may generate a fourth virtual overlay 1540 and a fifth virtual overlay 1550, each including a second area Ara2.

The second virtual machine 530 may be configured to display a composite overlay generated by disposing a physical overlay POL1 on virtual overlays VOLa corresponding to the first area Ara1, among the first to fifth overlays 1510 to 1550, on the first display 180a.

The third virtual machine 540 may be configured to display a composite overlay generated by disposing a physical overlay POL2 on virtual overlays VOLb corresponding to the second area Ara2, among the first to fifth overlays 1510 to 1550, on the second display 180b.

The fourth virtual machine 550 may be configured to display a composite overlay generated by disposing a physical overlay POL3 on virtual overlays VOLb corresponding to the second area Ara2, among the first to fifth overlays 1510 to 1550, on the third display 180m.

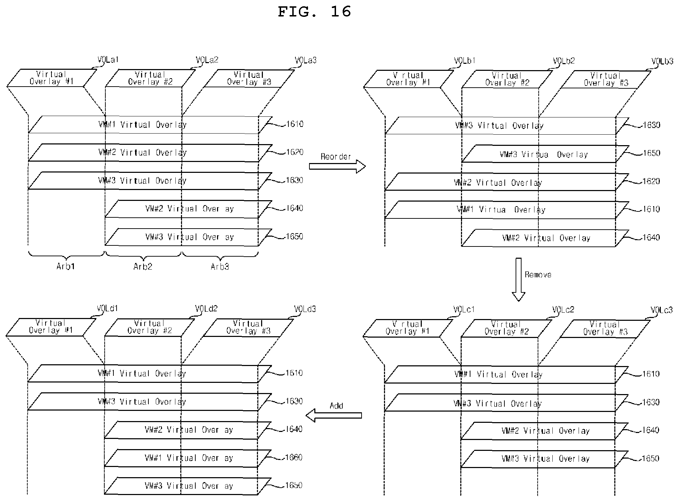

FIG. 16 is a view referred to in describing sequence change, deletion, and addition of a plurality of virtual overlays.

Referring to the figure, each of the first virtual machine 520, the second virtual machine 530, and the third virtual machine 540 may generate a first virtual overlay 1610, a second virtual overlay 1620, and a third virtual overlay 1630, each including a first area Arb1, a second area Arb2, and a third area Arb3.

Meanwhile, each of the second virtual machine 530 and the third virtual machine 540 may generate a fourth virtual overlay 1640 and a fifth virtual overlay 1650, each including a second area Arb2 and a third area Arb3.

The second virtual machine 530 may be configured to display virtual overlays VOLa1 corresponding to the first area Arb1, among the first to fifth overlays 1610 to 1650, on the first display 180a.

The third virtual machine 540 may be configured to display virtual overlays VOLa2 corresponding to the second area Arb2, among the first to fifth overlays 1610 to 1650, on the second display 180b.

The fourth virtual machine 550 may be configured to display virtual overlays VOLa3 corresponding to the third area Arb3, among the first to fifth overlays 1610 to 1650, on the third display 180m.

Meanwhile, the figure illustrates that the first virtual overlay 1610, the second virtual overlay 1620, the third virtual overlay 1630, the fourth virtual overlay 1640, and the fifth virtual overlay 1650 are disposed from top to bottom.

The layer disposition sequence may be set by the first virtual machine 520.

Meanwhile, the first virtual machine 520 may change the layer sequence of the plurality of virtual layers.

The figure illustrates that, as the result of changing the layer sequence, the third virtual overlay 1630, the fifth virtual overlay 1650, the second virtual overlay 1620, the first virtual overlay 1610, and the fourth virtual overlay 1640 are disposed from top to bottom.

As described above, the layer sequence may be easily changed using the first virtual machine 520.

Meanwhile, as shown in the figure, the first virtual machine 520 may delete the second virtual overlay 1620, which is one of the plurality of virtual layers 1610 to 1650.

Meanwhile, as shown in the figure, the first virtual machine 520 may add a virtual overlay 1600 to the plurality of virtual layers 1610 and 1630 to 1650.

The figure illustrates that the virtual overlay 1600 is added onto the fifth virtual overlay 1650.

As described above, the first virtual machine 520 may perform various operations, such as layer sequence change, deletion, or addition of virtual overlays. Consequently, overlay editing may be easily performed, and a user interface may be freely implemented.

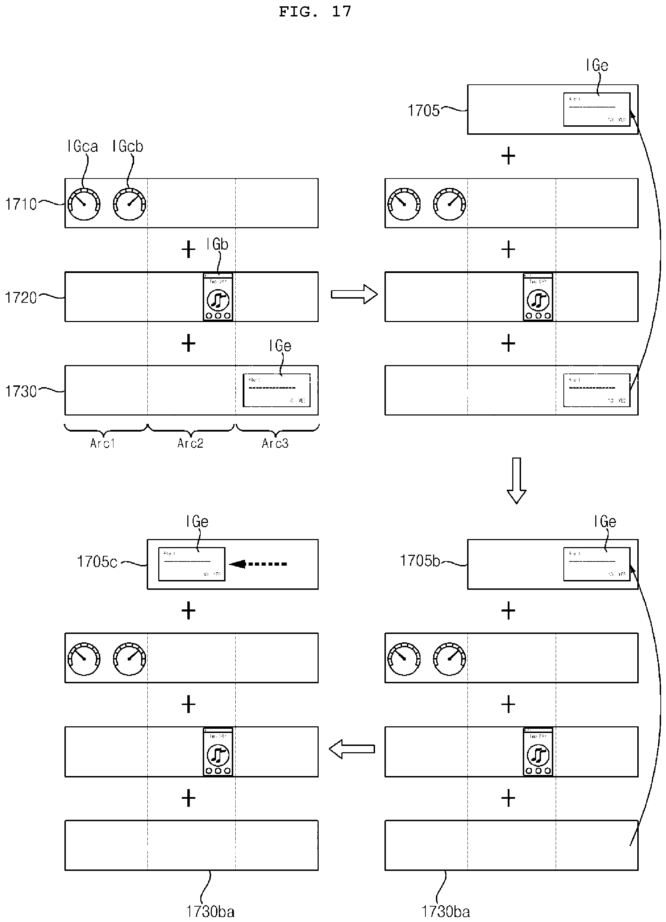

FIGS. 17 to 18E illustrate various examples of virtual overlays for the first to third displays.

First, FIG. 17 illustrates that message information is received during display of first to third virtual overlays 1710 to 1730 and a fourth virtual overlay 1705 including the message information is displayed.

Referring to the figure, the first virtual machine 520 may generate a first virtual overlay 1710 including vehicle speed information IGca and IGcb in a first area Arc1, the second virtual machine 530 may generate a second virtual overlay 1720 including content information or contact information IGb in a second area Arc2, and the third virtual machine 540 may generate a third virtual overlay 1730 including map information in all areas Arc1, Arc2, and Arc3 and message information IGe in the third area Arc3.

Meanwhile, in response to message information being received, the first virtual machine 520 may generate message information IGe and may be configured to display the message information IGe.

For example, in response to message information being received, the first virtual machine 520 may generate message information IGe and may transmit the generated message information IGe to the third virtual machine 540.

In response thereto, the third virtual machine 540 may generate a fourth virtual overlay 1705 including the message information IGe in the third area Arc3.

In particular, the third virtual machine 540 may generate a third virtual overlay 1730 including map information in all areas Arc1, Arc2, and Arc3 and message information IGe in the third area Arc3.

The first virtual machine 520 may be configured to display at least one of the first to third virtual overlays on the first to third displays 180a, 180b, and 180m. Consequently, various kinds of information may be displayed through the display. In addition, the display sequence and display area of the plurality of overlays may be changed even though the number of virtual machines that are driven is increased.

For example, the vehicle speed information IGca and IGcb may be displayed on the first display 180a, the contact information IGb may be displayed on the second display 180b, and the map information and the message information IGe may be displayed on the third display 180m.

Meanwhile, as shown in the figure, the first virtual machine 520 may separately generate a fourth virtual overlay 1705 including the message information IGe in the third area Arc3.

The first virtual machine 520 may be configured to delete the message information IGe from the third virtual overlay 1730.

As shown in the figure, therefore, the third virtual overlay 1730 may include only the map information in all areas Arc1, Arc2, and Arc3 in the state in which the message information IGe is deleted therefrom.

Meanwhile, the first virtual machine 520 may move the position of the message information IGe in the fourth virtual overlay 1705.

For example, as shown in the figure, the first virtual machine 520 may move the position of the message information IGe in a fourth virtual overlay 1705c from the third area Arc3 to the second area Arc2.

In response to the position of the message information IGe being moved from the third area Arc3 to the second area Arc2, as described above, the vehicle speed information IGca and IGcb may be displayed on the first display 180a, the contact information IGb and the message information IGe may be displayed on the second display 180b, and only the map information may be displayed on the third display 180m.

For example, In response to first virtual machine 520 assigning the priority to the message information IGe, which is one of the contact information IGb and the message information IGe, the message information IGe may be displayed on the contact information IGb, whereby the contact information IGb and the message information IGe may be displayed on the second display 180b in the state in which the message information IGe is displayed on the contact information IGb.

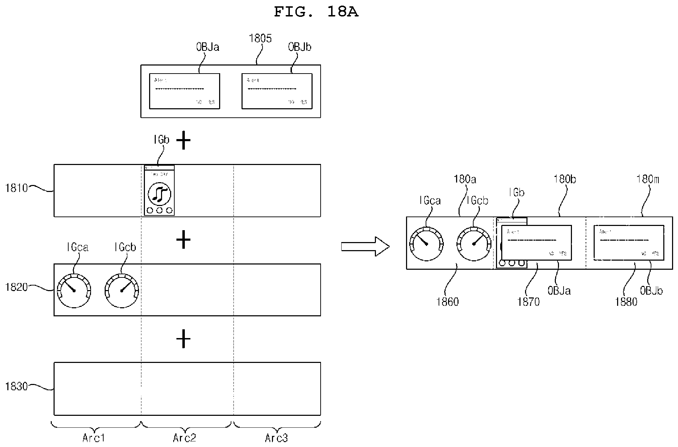

FIG. 18A illustrates that four virtual overlays 1805, 1810, 1820, and 1830 are sequentially disposed from top to bottom.

Referring to the figure, the first virtual machine 520 may generate a fourth virtual overlay 1805 including first message information OBJa in a second area Arc2 and second message information OBJb in a third area Arc3, the second virtual machine 530 may generate a second virtual overlay 1810 including content information or contact information IGb in the second area Arc2, the first virtual machine 520 may generate a first virtual overlay 1820 including vehicle speed information IGca and IGcb in the first area Arc1, and the third virtual machine 540 may generate a third virtual overlay 1830 including map information in all areas Arc1, Arc2, and Arc3.

The first virtual machine 520 may sequentially dispose the fourth virtual overlay 1805, the second virtual overlay 1810, the first virtual overlay 1820, and the third virtual overlay 1830 from top to bottom.

Consequently, the fourth virtual overlay 1805 may be disposed at the uppermost side.

As shown in the figure, the vehicle speed information IGca and IGcb may be displayed on the first display 180a in a state of being displayed on map information 1860, the contact information IGb may be displayed on the second display 180b in a state of being displayed on map information 1870, the first message information OBJa may be displayed on the second display 180b in a state of being displayed on the contact information IGb, and the second message information OBJb may be displayed on the third display 180m in a state of being displayed on map information 1880.

That is, in response to message information being received, the first virtual machine 520 may be configured to display the first message information OBJa on the contact information IGb in the second display 180b. Consequently, various kinds of information may be displayed through the display.

Meanwhile, in response to message information being received, the first virtual machine 520 may be configured to display the second message information OBJb on the map information 1880 in the third display 180m. Consequently, various kinds of information may be displayed through the display.

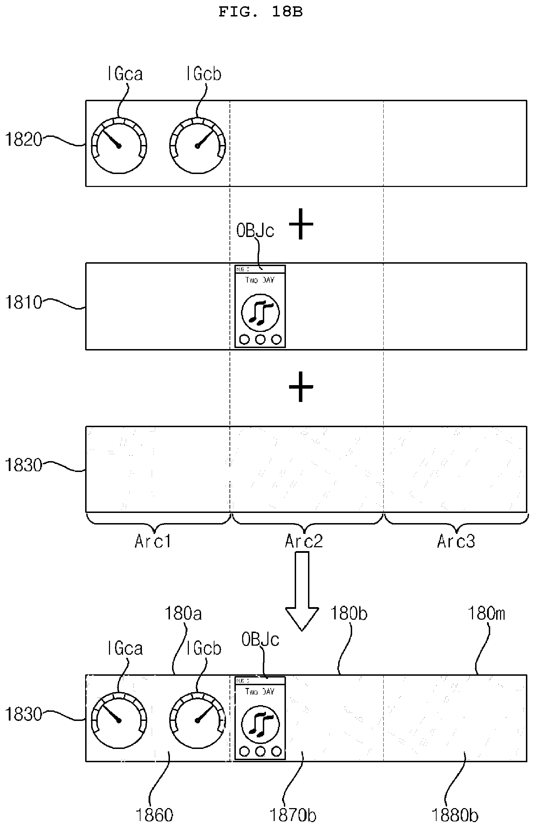

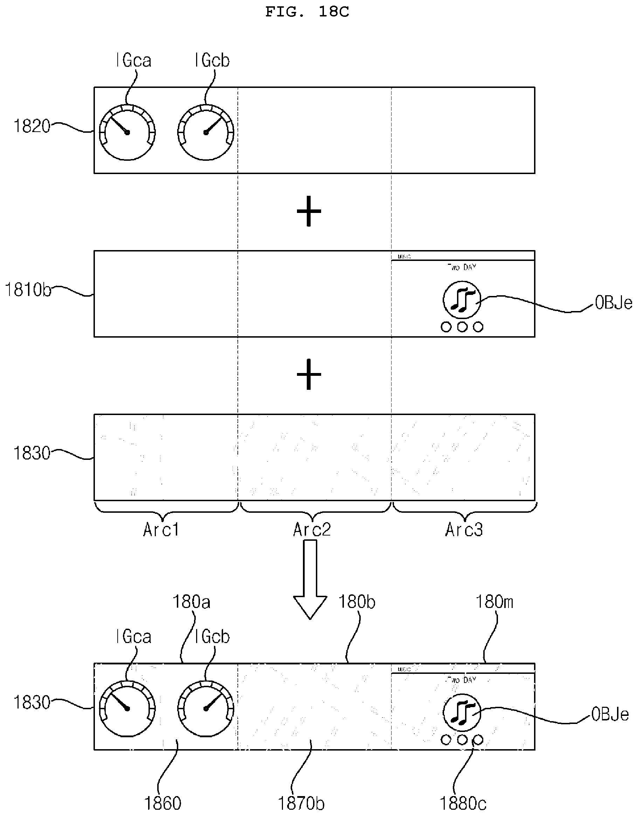

Meanwhile, the first virtual machine 520 may move an object on the plurality of virtual overlays, and may be configured to display the moved object on at least one of the plurality of displays. Consequently, the object may be moved and displayed. This will be described with reference to FIGS. 18B and 18C.

FIG. 18B illustrates that a first virtual overlay 1820, a second virtual overlay 1810, and a third virtual overlay 1830 are sequentially disposed from top to bottom, unlike FIG. 18A.

The first virtual machine 520 may sequentially dispose a first virtual overlay 1820 including vehicle speed information IGca and IGcb in a first area Arc1, a second virtual overlay 1810 including contact information OBJc in a second area Arc2, and a third virtual overlay 1830 including map information in all areas Arc1, Arc2, and Arc3 from top to bottom.

As shown in the figure, therefore, the vehicle speed information IGca and IGcb may be displayed on map information 1860b in the first display 180a, the contact information OBJc may be displayed on map information 1870b in the second display 180b, and map information 1880b may be displayed on the third display 180m.

FIG. 18C illustrates that a first virtual overlay 1820, a second virtual overlay 1810b, and a third virtual overlay 1830 are sequentially disposed from top to bottom, similarly to FIG. 18B.

The first virtual machine 520 may sequentially dispose a first virtual overlay 1820 including vehicle speed information IGca and IGcb in a first area Arc1, a second virtual overlay 1810b including contact information OBJe in a third area Arc3, and a third virtual overlay 1830 including map information in all areas Arc1, Arc2, and Arc3 from top to bottom.

At this time, the first virtual machine 520 may enlarge the contact information OBJe, and may be configured to display or dispose the enlarged contact information OBJe in the third area Arc3.

As shown in the figure, therefore, the vehicle speed information IGca and IGcb may be displayed on map information 1860 in the first display 180a, map information 1870b may be displayed in the second display 180b, and the enlarged contact information OBJe may be displayed on map information 1880c in the third display 180m.

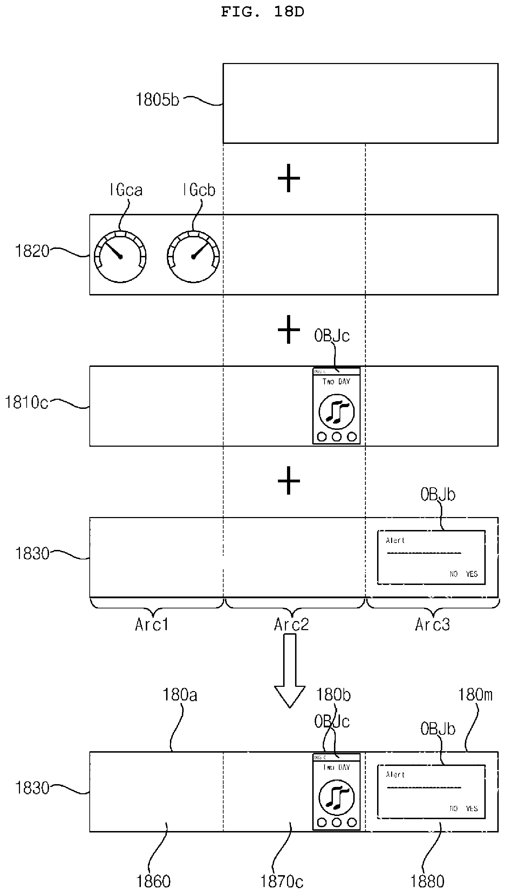

FIG. 18D illustrates that a first virtual overlay 1820, a second virtual overlay 1810c, and a third virtual overlay 1830 are sequentially disposed from top to bottom, similarly to FIG. 18B.

Unlike FIG. 18B, however, a fourth virtual overlay 1805b is displayed on the first virtual overlay 1820.

Meanwhile, the third virtual overlay 1830 may include map information in all areas Arc1, Arc2, and Arc3, and may further include message information OBJa in the third area Arc3.

That is, the first virtual machine 520 may sequentially dispose a fourth virtual overlay 1805b, a first virtual overlay 1820 including vehicle speed information IGca and IGcb in a first area Arc1, a second virtual overlay 1810c including contact information OBJc in a second area Arc2, and a third virtual overlay 1830 including map information in all areas Arc1, Arc2, and Arc3 and message information OBJa in the third area Arc3 from top to bottom.

As shown in the figure, therefore, map information 1860 may be displayed on the first display 180a, the contact information OBJc may be displayed on map information 1870c in the second display 180b, and the message information OBJa may be displayed on map information 1880 in the third display 180m.

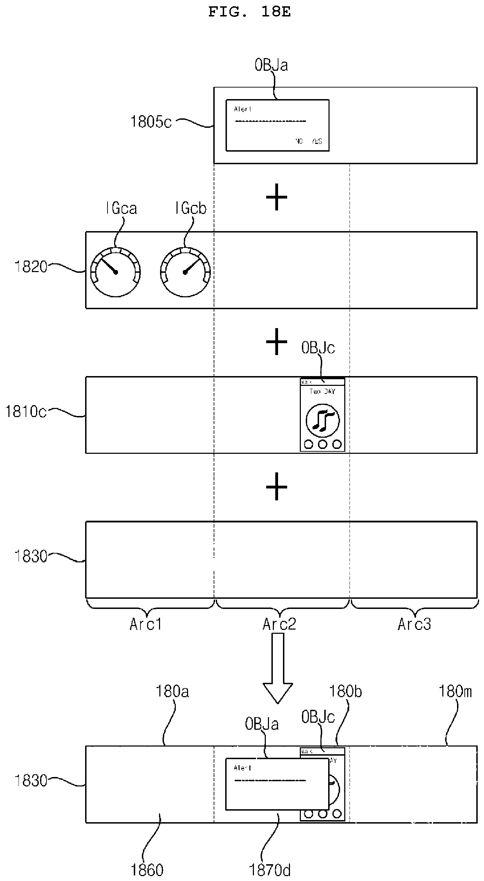

FIG. 18E illustrates that a fourth virtual overlay 1805c, a first virtual overlay 1820, a second virtual overlay 1810c, and a third virtual overlay 1830 are sequentially disposed from top to bottom, similarly to FIG. 18D.

The first virtual machine 520 may sequentially dispose a fourth virtual overlay 1805c including message information OBJa in a second area Arc2, a first virtual overlay 1820 including vehicle speed information IGca and IGcb in a first area Arc1, a second virtual overlay 1810c including contact information OBJc in the second area Arc2, and a third virtual overlay 1830 including map information in all areas Arc1, Arc2, and Arc3 from top to bottom.

As shown in the figure, therefore, map information 1860 may be displayed on the first display 180a, the contact information OBJc may be displayed on map information 1870d in the second display 180b, and the message information may be displayed on the third display 180m.

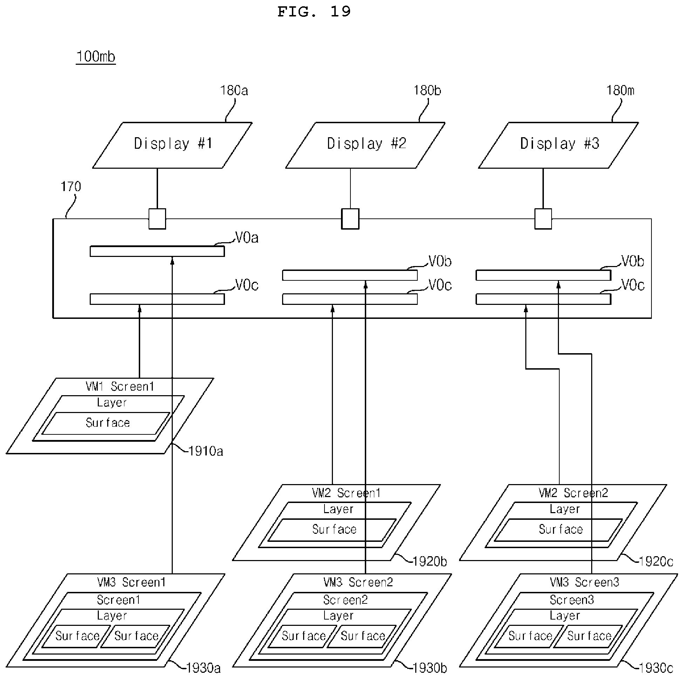

FIG. 19 is a view illustrating that a plurality of virtual overlays is displayed on the first to third displays 180a, 180b, and 180m of a display apparatus 100mb for vehicle of FIG. 13.

Referring to the figure, a third virtual overlay 1930a generated by the third virtual machine 540 may be displayed on a first virtual overlay 1910a generated by the first virtual machine 520, whereby a composite overlay VOa and VOc may be displayed on the first display 180a.

Referring to the figure, a third virtual overlay 1930b generated by the third virtual machine 540 may be displayed on a second virtual overlay 1920b generated by the second virtual machine 530, whereby a composite overlay VOb and VOc may be displayed on the second display 180b.

Referring to the figure, a third virtual overlay 1930c generated by the third virtual machine 540 may be displayed on a second virtual overlay 1920c generated by the second virtual machine 530, whereby a composite overlay VOa and VOc may be displayed on the third display 180m.

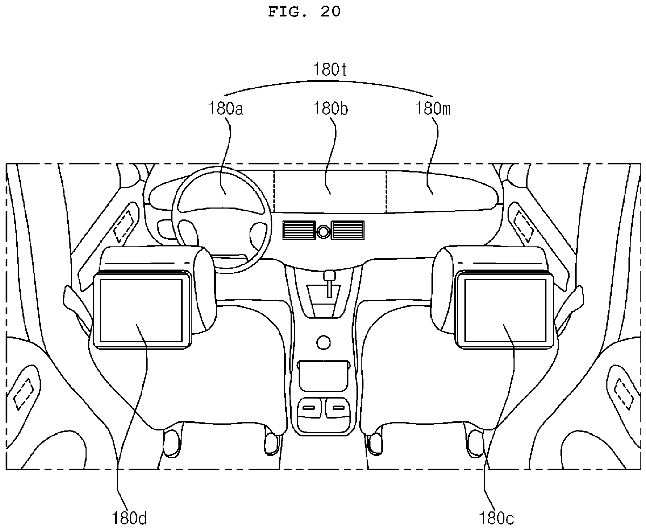

FIG. 20 is a view showing the external appearance of a display apparatus for vehicle according to a further embodiment of the present disclosure.

Referring to the figure, the display apparatus 100 for vehicle according to the further embodiment of the present disclosure may include a plurality of displays 180a, 180b, and 180m extending from a driver's seat to a passenger seat, rear seat entertainment displays 180c and 180d, and a signal processing device 170 configured to perform signal processing to display images and information on the displays 180a, 180b, 180m, 180c, and 180d.

The plurality of displays 180a, 180b, and 180m may be disposed in a single frame.

For example, the plurality of displays 180a, 180b, and 180m may be implemented as a single seamless display 170t.

Among the plurality of displays 180a, 180b, and 180m, the first display 180a may be a cluster display, the second display 180b may be an AVN display, and the third display 180m may be a passenger seat display. The fourth display 180c may be a first RSE display, and the fifth display 180d may be a second RSE display.

Meanwhile, the signal processing device 170 may have a processor 175 provided therein, and may execute first to sixth virtual machines 520 to 570 on a hypervisor 505 in the processor 175.

The second virtual machine 530 may be operated for the first display 180a, the third virtual machine 540 may be operated for the second display 180b, the fourth virtual machine 550 may be operated for the third display 180m, the fifth virtual machine 560 may be operated for the fourth display 180c, and the sixth virtual machine 570 may be operated for the fifth display 180d.

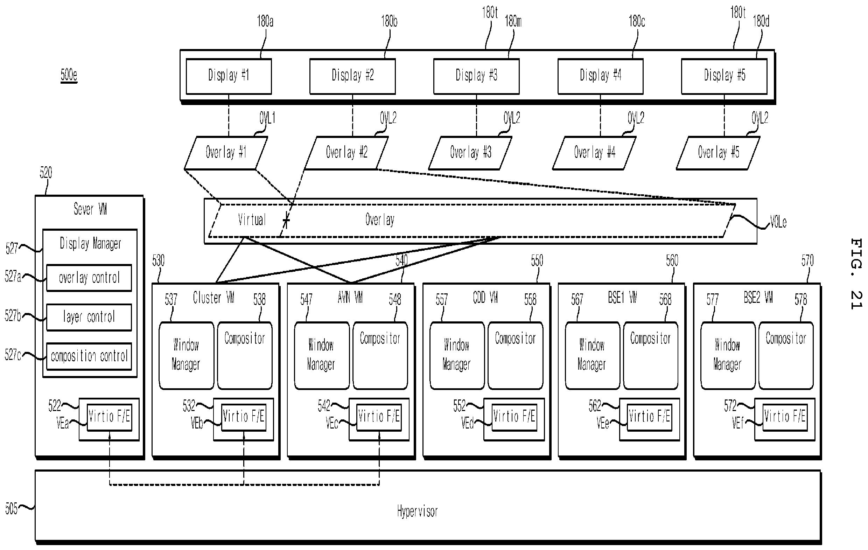

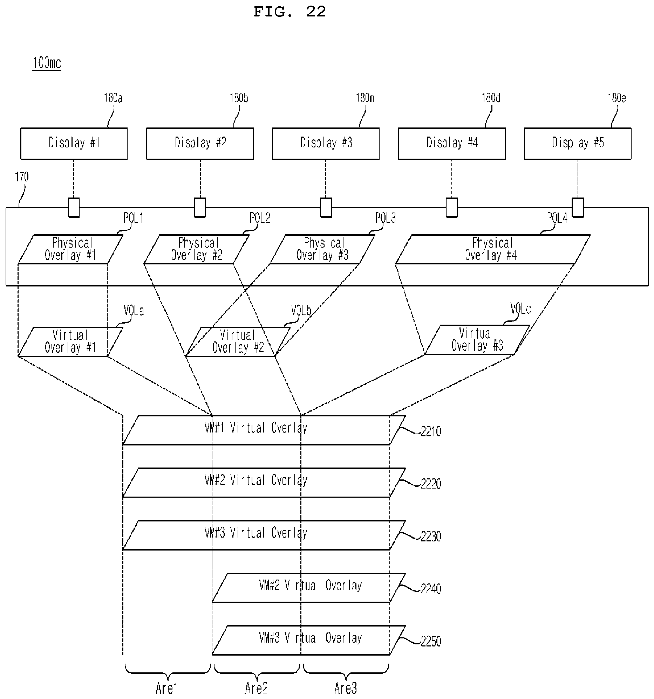

FIGS. 21 and 22 are views referred to in the description of FIG. 20.

First, FIG. 21 is a view describing another example of display of overlays in the system driven in the signal processing device according to the embodiment of the present disclosure.

Referring to the figure, in the system 500e of FIG. 21, the processor 175 in the signal processing device 170 according to the embodiment of the present disclosure drives the hypervisor 505, and executes the first virtual machine 520, the second virtual machine 530, the third virtual machine 540, the fourth virtual machine 550, the fifth virtual machine 560, and the sixth virtual machine 570 on the hypervisor 505.

Meanwhile, the system 500e of FIG. 21 is different from the system 500d of FIG. 14 in that the fifth virtual machine 560 and the sixth virtual machine 570 are further executed.

Consequently, for a description of the first virtual machine 520, the second virtual machine 530, the third virtual machine 540, and the fourth virtual machine 550, refer to FIG. 14, and the fifth virtual machine 560 and the sixth virtual machine 570 will be mainly described hereinafter.

Meanwhile, the first virtual machine 520 according to the embodiment of the present disclosure changes the layer sequence or display area of a virtual overlay, and transmits the changed virtual overlay or information regarding the changed virtual overlay to the second virtual machine 530, the third virtual machine 540, the fourth virtual machine 550, the fifth virtual machine 560, or the sixth virtual machine 570 for displaying the changed virtual overlay on the first display 180a, the second display 180b, or the third display 180m.

Consequently, the display sequence and display area of the plurality of overlays may be changed. In addition, the display sequence and display area of the plurality of overlays may be changed even though the number of virtual machines that are driven is increased.

Meanwhile, the fifth virtual machine 560 or the sixth virtual machine 570 may combine the changed virtual overlay with each physical overlay, and may be configured to display the composite overlay on the fourth display 180c or the fifth display 180d. Consequently, the composite overlay may be displayed on the display.

Meanwhile, a first virtual machine 520 according to another embodiment of the present disclosure is configured to generate a virtual overlay and transmit the virtual overlay to a fifth virtual machine 560 or a sixth virtual machine 570 according to another embodiment of the present disclosure, and the fifth virtual machine 560 or the sixth virtual machine 570 is configured to change the layer sequence or display area of the virtual overlay in response to the virtual overlay being displayed on the fourth display 180c or the fifth display 180d.

Consequently, the display sequence and display area of the plurality of overlays may be changed. In addition, the display sequence and display area of the plurality of overlays may be changed even though the number of virtual machines that are driven is increased.

Meanwhile, an input and output client interface 562 in the fifth virtual machine 560 may include a front interface VEe configured to receive a command for constructing the virtual overlay from the first virtual machine 520 or to transmit a command for constructing the virtual overlay to the first virtual machine 520.

Meanwhile, the fifth virtual machine 560 may include a window manager 567 configured to control a window of an image in which an overlay will be generated or displayed and a compositor 568 configured to combine overlays or windows generated by the fifth virtual machine 560.

Meanwhile, the input and output client interface 572 in the sixth virtual machine 570 may include a front interface VEf configured to receive a command for constructing the virtual overlay from the first virtual machine 520 or to transmit a command for constructing the virtual overlay to the first virtual machine 520.

Meanwhile, the sixth virtual machine 570 may include a window manager 577 configured to control a window of an image in which an overlay will be generated or displayed and a compositor 578 configured to combine overlays or windows generated by the sixth virtual machine 570.

Meanwhile, the first virtual machine 520 to the sixth virtual machine 570 may transmit or receive virtual overlays using the shared memory 508, as described with reference to FIGS. 8, 9A, and 9B.

Meanwhile, the first virtual machine 520 may change the construction of the layer displayed on the first display 180a, the second display 180b, the third display 180m, the fourth display 180c, or the fifth display 180d during run time. Consequently, the construction of the layer displayed during run time may be changed.

FIG. 22 is a view referred to in the description of FIG. 21.

FIG. 22 is a view referred to in describing display of an image using a plurality of virtual overlays.

Referring to the figure, each of the first virtual machine 520, the second virtual machine 530, and the third virtual machine 540 may generate a first virtual overlay 2210, a second virtual overlay 2220, and a third virtual overlay 2230, each including a first area Are1, a second area Are2, and a third area Are3.

Meanwhile, each of the second virtual machine 530 and the third virtual machine 540 may generate a fourth virtual overlay 2240 and a fifth virtual overlay 2250, each including a second area Are2 and a third area Are3.

The second virtual machine 530 may be configured to display a composite overlay generated by disposing a physical overlay POL1 on virtual overlays VOLa corresponding to the first area Are1, among the first to fifth overlays 2210 to 2250, is displayed on the first display 180a.

The third virtual machine 540 may be configured to display a composite overlay generated by disposing a physical overlay POL2 on virtual overlays VOLb corresponding to the second area Are2, among the first to fifth overlays 2210 to 2250, is displayed on the second display 180b.

The fourth virtual machine 550 may be configured to display a composite overlay generated by disposing a physical overlay POL3 on virtual overlays VOLb corresponding to the second area Are2, among the first to fifth overlays 2210 to 2250, is displayed on the third display 180m.

The fifth virtual machine 560 may be configured to display a composite overlay generated by disposing a physical overlay POL4 on virtual overlays VOLc corresponding to the third area Are3, among the first to fifth overlays 2210 to 2250, is displayed on the fourth display 180c.

The sixth virtual machine 570 may be configured to display a composite overlay generated by disposing a physical overlay POL3 on virtual overlays VOLc corresponding to the third area Are3, among the first to fifth overlays 2210 to 2250, is displayed on the fifth display 180d.

At this time, the physical overlay POL3 may have a size that can be displayed in both the fourth display 180c and the fifth display 180d, as shown in the figure.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to perform signal processing for a display located in a vehicle, wherein
the processor is configured to execute first to third virtual machines on a hypervisor in the processor,
the second virtual machine is operated for a first display,
the third virtual machine is operated for a second display, and
the first virtual machine in the processor generates a virtual overlay, changes a layer sequence or display area of the virtual overlay, and transmits the changed virtual overlay or information regarding the changed virtual overlay to the second virtual machine or the third virtual machine for displaying the changed virtual overlay on the first display or the second display.

2. The signal processing device of claim 1, wherein the second virtual machine or the third virtual machine is configured to combine the changed virtual overlay with each physical overlay, and display a composite overlay on the first display or the second display.

3. The signal processing device of claim 2, wherein the second virtual machine or the third virtual machine is configured to map the virtual overlay and the physical overlay one to one, and display a composite overlay generated by one-to-one mapping on the first display or the second display.

4. The signal processing device of claim 2, wherein the second virtual machine or the third virtual machine is configured to map the virtual overlay and the physical overlay one to n, and display a composite overlay generated by one-to-n mapping on the first display or the second display.

5. The signal processing device of claim 1, wherein the first virtual machine is configured to delete the virtual overlay or add another virtual overlay.

6. The signal processing device of claim 1, wherein
each of the second virtual machine and the third virtual machine is configured to generate a virtual overlay, and
the first virtual machine is configured to set an overlay sequence or display area of the virtual overlays generated by the second virtual machine and the third virtual machine.

7. The signal processing device of claim 6, wherein the first virtual machine is configured to change the overlay sequence or display area of the virtual overlays generated by the second virtual machine and the third virtual machine.

8. The signal processing device of claim 1, wherein
the processor further is configured to execute a fourth virtual machine operated for a third display,
each of the second virtual machine to the fourth virtual machine is configured to generate a virtual overlay, and
the first virtual machine is configured to set an overlay sequence or display area of the virtual overlays generated by the second virtual machine to the fourth virtual machine.

9. The signal processing device of claim 1, wherein the first virtual machine is configured to change a construction of a layer displayed on the first display or the second display during run time.

10. The signal processing device of claim 1, wherein the first virtual machine is configured to generate the virtual overlay displayed on both the first display and the second display.

11. The signal processing device of claim 1, wherein the first virtual machine is configured to move and display the generated virtual overlay on the first display or the second display.

12. The signal processing device of claim 1, wherein
the first virtual machine is configured to generate a first virtual overlay comprising vehicle speed information,
the second virtual machine is configured to generate a second virtual overlay comprising content information or contact information,
the third virtual machine is configured to generate a third virtual overlay comprising map information, and
the first virtual machine is configured to display at least one of the first to third virtual overlays on the first display or the second display.

13. The signal processing device of claim 12, wherein the first virtual machine is configured to:
display the vehicle speed information and the contact information on the first display; and
display the map information and speed limit information on the second display.

14. The signal processing device of claim 1, wherein
the processor further is configured to execute a fourth virtual machine operated for a third display,
the first virtual machine is configured to generate a first virtual overlay comprising vehicle speed information,
the second virtual machine is configured to generate a second virtual overlay comprising content information or contact information,
the third virtual machine is configured to generate a third virtual overlay comprising map information, and
the first virtual machine is configured to display at least one of the first to third virtual overlays on the first display to the third display.

15. The signal processing device of claim 14, wherein the first virtual machine is configured to :
display the vehicle speed information on the map information in the first display;
display the contact information on the map information in the second display; and
display the map information on the third display.

16. The signal processing device of claim 15, wherein, in response to message information being received, the first virtual machine is configured to display the message information on the contact information or the map information in the second display.

17. The signal processing device of claim 1, wherein the first virtual machine is configured to move an object on a plurality of virtual overlays, and display the moved object on at least one of a plurality of displays.

18. The signal processing device of claim 1, wherein
the first virtual machine comprises a display manager comprising an overlay controller configured to control an overlay, a layer controller configured to control a layer, and a composition controller configured to control a construction or sequence of the layer, and
each of the second virtual machine and the third virtual machine comprises a window manager configured to display a window of a layer.

19. A signal processing device comprising a processor configured to perform signal processing for a display located in a vehicle, wherein
the processor is configured to execute first to third virtual machines on a hypervisor in the processor,
the second virtual machine is operated for a first display,
the third virtual machine is operated for a second display,
the first virtual machine in the processor is configured to generate a virtual overlay and transmit the virtual overlay to the second virtual machine or the third virtual machine, and
the second virtual machine or the third virtual machine is configured to change a layer sequence or display area of the virtual overlay in response to the virtual overlay being displayed on the first display or the second display.

20. A display apparatus for vehicle, the display apparatus comprising:
a first display;
a second display; and
a signal processing device comprising a processor configured to perform signal processing for the first display and the second display, wherein
the signal processing device comprises the signal processing device of any one of claims 1 to 19.
